# EUROPEAN PATENT APPLICATION

(11) **EP 4 410 106 A1**
(43) Date of publication of application: **07.08.2024**
(21) Application number: 22876355.3
(22) Date of filing: 28.09.2022
(51) Int. Cl.: A23D 7/00, A23C 11/00, A23C 20/00, A23D 7/005

(54) **OIL-IN-WATER EMULSION CONTAINING TRANSESTERIFIED OIL**

(30) Priority: 28.09.2021 JP 2021158069; 28.09.2021 JP 2021158142; 29.09.2021 JP 2021159448
(71) Applicant: Fuji Oil Holdings Inc., Izumisano-shi, Osaka 598-8540 (JP)
(72) Inventor: NAGAFUCHI, Junta, Izumisano-shi, Osaka 598-8540 (JP); YANAGISAWA, Masanobu, Izumisano-shi, Osaka 598-8540 (JP); TAKEDA, Mariko, Izumisano-shi, Osaka 598-8540 (JP); HOSHIKAWA, Sasara, Izumisano-shi, Osaka 598-8540 (JP)
(74) Representative: Becker, Eberhard
(86) International application number: PCT/JP2022/036211
(87) International publication number: WO 2023/054489

(57) **Abstract**

The present invention addresses the problem of providing an oil-in-water emulsion which suppresses unusual flavors derived from food and drink, in particular, unusual flavors derived from plant-based milk, plant-based fermented milk, and animal protein, without adversely affecting overall flavor. The inventors have discovered that using an oil-in-water emulsion containing a random transesterified oil having a specific fatty acid composition suppresses unusual flavors derived from food and drink.

## Description

### Technical Field

The present invention relates to an oil-in-water emulsion containing an interesterified oil and/or fat.

### Background Art

There are various aspects of foods and beverages in which an oil-in-water emulsion is used. In particular, foods and beverages containing a plant component, which is said to have a low environmental load, have been attracting attention due to increases in health consciousness and interest in SDGs in recent years. For example, opportunities to take in products in which no milk raw material is used, and vegetable milks produced from soybeans, almonds, and the like, have increased and spread. Such a flow has also spread to fermented foods using animal milk such as yogurt or cheese.

In another aspect, the number of people who actively take in foods and beverages containing a protein has increased due to an increase in health consciousness. In addition, foods and beverages obtained by adding a protein to dairy products such as cow milk and beverages, with emphasis on functionality, have also appeared.

A plant material may be used in such foods and beverages. In foods and beverages using a plant material, a rich flavor derived from a plant is detected. However, those foods and beverages might have a strange flavor derived from the plant used as a raw material (e.g., a grassy smell from soybean, etc.) which is often problematic in commercialization.

Various methods for improving strange flavors derived from plants have been proposed. For example, as methods for improving grassy smells and bean smells derived from soymilk, there have been provided a milk-substituted food and beverage containing a reduced-fat soybean protein material and campesterol and stigmasterol as phytosterols and having less grassy smells unique to soybean (Patent Document 1), and a soymilk-containing liquid food and beverage obtained by blending coconut milk into soymilk and heat-treating the blend and having a suppressed unpleasant taste unique to soybean after eating or drinking (Patent Document 2).

As foods and beverages of almonds, there are disclosed beverages, foods and seasonings excellent in flavor, which use a crushed almond product (Patent Document 3), foaming oil-in-water emulsions containing a paste of almond which is a nut (Patent Document 4), water-in-oil emulsified oil and/or fat compositions produced from almond milk (Patent Document 5), and the like.

As another solution through plant food materials, animal milk raw materials such as cow milk, heavy cream, and skimmed milk powder have a unique milk flavor and are preferred. However, when lactic acid fermentation or the like is performed using, as a raw material, a plant-based milk containing a plant oil and/or fat such as soymilk or almond milk as a substitute for the animal milk raw material, a unique unpleasant deterioration smell may be generated over time as compared with a fermented food using an animal-based milk as a raw material. Although the plant-based milk may have a fresh and good fermented flavor like yogurt or cheese immediately after fermentation, the flavor may not be maintained and the flavor may deteriorate over time or may deteriorate due to heat sterilization treatment after fermentation.

In order to cope with such issues, advanced production techniques are required, such as fermentation with a combination of specific lactic acid bacteria, fermentation under anoxic conditions, and filling in a container having extremely low oxygen permeability after fermentation, as described in, for example, Patent Documents 6 to 9.

In addition, some animal proteins have an unpleasant smell or taste. For example, milk proteins subjected to concentration processing and drying processing in the production process have unique strange flavors (off-flavors) known as a casein odor and a whey odor, and have disadvantages of bad taste and unpleasant feeling when ingested. Therefore, there is an issue of poor palatability at the time of eating and drinking.

In order to solve the above issues, various methods have been proposed. As methods for removing an odor of casein, there have been proposed, for example, a method in which whey minerals are added to sodium caseinates (Patent Document 10), a method in which a casein dispersion solution is stirred and washed at a predetermined shear rate, and an odor substance of casein is transferred to alkaline water or the like and removed (Patent Document 11), and a method in which chlorogenic acid is used (Patent Document 12).

### Citation List

### Patent Documents

Patent Document 1: JP 2013-13395 A
Patent Document 2: JP 2009-159911 A
Patent Document 3: JP 2020-80672 A
Patent Document 4: JP S62-22562 A
Patent Document 5: JP 2017-077219 A
Patent Document 6: JP 3307255 B
Patent Document 7: JP 3327155 B
Patent Document 8: JP 3498551 B
Patent Document 9: JP H11-75688 A
Patent Document 10: JP H8-56583 A
Patent Document 11: JP 2000-270782 A
Patent Document 12: JP 2003-210119 A

### Summary of Invention

### Technical Problem

Regarding strange flavors derived from plant-based milk, in Patent Document 1, a certain level of reduction in strange flavors derived from soybean is observed by blending a phytosterol. However, it is unclear whether a similar effect is obtained for milk derived from other plants. In Patent Document 2, strange flavors derived from soymilk can be suppressed, but there is a concern that the flavor of coconut milk is superior to the good flavor of soymilk depending on the amount of coconut milk, and the balance of the flavor may be lost.

In addition, Patent Document 3 describes that an almond paste having a specific particle size has a good flavor, but does not disclose incorporation into an oil-in-water emulsion, production method thereof, or strange flavors. Also in Patent Document 4, an almond paste-containing cream having good whippability is obtained, but no study has been made on the flavor, particularly the strange flavors derived from almond. Patent Document 5 describes that richness in flavor is imparted, but this application is also unclear in terms of strange flavors derived from almond milk.

Regarding the strange flavors derived from the plant-based fermented milk, the techniques of Patent Documents 6 to 9 could suppress generation of unpleasant deterioration smells to some extent, but have issues of lack of versatility due to various restrictions such as inapplicability to specific lactic acid bacterial strains having preferable physiological functions and necessity of investment for new fermentation facilities.

Regarding the strange flavor derived from the animal protein, the methods for improving a strange flavor derived from milk protein proposed in Patent Documents 10 to 12 exhibit effects to some extent, but are not sufficiently satisfied by many consumers and have issues of lack of versatility. There is still a need for a method of further improving the strange state and strange odor of milk protein.

In view of such circumstances, an object of the present invention is to suppress strange flavors derived from food and beverages without impairing the whole flavor. Specifically, an object of the present invention is to suppress a strange flavor derived from a plant, a strange flavor derived from fermentation of plant-based milk, and a strange flavor derived from an animal protein.

### Solution to Problem

The present inventors have conducted intensive studies in order to solve the above-described issues, and have found that the use of an oil-in-water emulsion containing a randomly interesterified oil and/or fat having a specific fatty acid composition suppresses strange flavors derived from food and beverages, and completed the present invention.

That is, the present invention relates to:
(1) an oil-in-water emulsion containing a randomly interesterified oil and/or fat satisfying the following (A) and (B):
   (A) in a constituent fatty acid composition, saturated fatty acids content having from 6 to 10 carbon atoms is from 0.3 to 40 wt.%;
   (B) in a constituent fatty acid composition, saturated fatty acids content having from 12 to 14 carbon atoms is from 40 to 80 wt.%;
(2) the oil-in-water emulsion according to (1), wherein the randomly interesterified oil and/or fat satisfies (A), (B), and the following (C):
   (C) oleic acid content in the constituent fatty acid composition is 10 wt.% or less;
(3) the oil-in-water emulsion according to (1), wherein the randomly interesterified oil and/or fat satisfies (A), (B), and the following (D):
   (D) a ratio of (the saturated fatty acids content having from 12 to 14 carbon atoms)/(the saturated fatty acids content having from 6 to 10 carbon atoms) is from 1.0 to 6.0;
(4) the oil-in-water emulsion according to (2), wherein the randomly interesterified oil and/or fat satisfies (A), (B), (C), and the following (D):
   (D) a ratio of (the saturated fatty acids content having from 12 to 14 carbon atoms)/(the saturated fatty acids content having from 6 to 10 carbon atoms) is from 1.0 to 6.0;
(5) the oil-in-water emulsion according to (1) or (2), wherein the (A) is from 1 to 35 wt.%;
(6) the oil-in-water emulsion according to (3) or (4), wherein the (A) is from 1 to 35 wt.%;
(7) the oil-in-water emulsion according to (1) or (2), containing a plant-based milk;
(8) the oil-in-water emulsion according to (3) or (4), containing a plant-based milk;
(9) the oil-in-water emulsion according to (5) or (6), containing a plant-based milk;
(10) the oil-in-water emulsion according to (7), wherein the plant-based milk is derived from one or more selected from almond, oat, and soybean;
(11) the oil-in-water emulsion according to (1) or (2), containing an animal protein;
(12) the oil-in-water emulsion according to (3) or (4), containing an animal protein;
(13) the oil-in-water emulsion according to (5) or (6), containing an animal protein;
(14) the oil-in-water emulsion according to (11), wherein protein content in the oil-in-water emulsion is 2.2 wt.% or more;
(15) the oil-in-water emulsion according to (11), wherein the animal protein is a milk protein;
(16) the oil-in-water emulsion according to (1) or (2), containing a plant-based fermented milk;
(17) the oil-in-water emulsion according to (3) or (4), containing a plant-based fermented milk;
(18) the oil-in-water emulsion according to (5) or (6), containing a plant-based fermented milk;
(19) the oil-in-water emulsion according to (16), wherein the plant-based fermented milk is fermented by microorganisms;
(20) the oil-in-water emulsion according to (19), wherein the microorganisms are one or more selected from lactic acid bacteria, yeast, and koji;
(21) an oil-in-water emulsion containing a plant-based milk and a randomly interesterified oil satisfying the following (A) and (B), the oil-in-water emulsion including a fermentation step by microorganisms:
   (A) in a constituent fatty acid composition, saturated fatty acids content having from 6 to 10 carbon atoms is from 0.3 to 40 wt.%;
   (B) in a constituent fatty acid composition, saturated fatty acids content having from 12 to 14 carbon atoms is from 40 to 80 wt.%;
(22) the oil-in-water emulsion according to (21), wherein the microorganisms are one or more selected from lactic acid bacteria, yeast, and koji;
(23) a food and beverage containing an oil-in-water emulsion containing a randomly interesterified oil and/or fat satisfying the following (A) and (B):
   (A) in a constituent fatty acid composition, saturated fatty acids content having from 6 to 10 carbon atoms is from 0.3 to 40 wt.%;
   (B) in a constituent fatty acid composition, saturated fatty acids content having from 12 to 14 carbon atoms is from 40 to 80 wt.%;
(24) the food and beverage according to (23), containing a plant-based milk;
(25) the food and beverage according to (23), containing an animal protein;
(26) the food and beverage according to (23), containing a plant-based fermented milk;
(27) a food and beverage containing the oil-in-water emulsion described in (21) or (22);
(28) the food and beverage according to (24) or (25), wherein the food and beverage is a beverage, a whip cream, or a whitener;
(29) the food and beverage according to (26) or (27), wherein the food and beverage is a plant-based yogurt, probiotic beverage, creams, ice creams, cheese, butter or margarine;
(30) a method of producing an oil-in-water emulsion prepared by using a randomly interesterified oil and/or fat satisfying the following (A) and (B):
   (A) in a constituent fatty acid composition, saturated fatty acids content having from 6 to 10 carbon atoms is from 0.3 to 40 wt.%;
   (B) in a constituent fatty acid composition, saturated fatty acids content having from 12 to 14 carbon atoms is from 40 to 80 wt.%;
(31) the method of producing an oil-in-water emulsion according to (30), wherein the oil-in-water emulsion contains a plant-based milk;
(32) the method of producing an oil-in-water emulsion according to (30), wherein the oil-in-water emulsion contains an animal protein;
(33) the method of producing an oil-in-water emulsion according to (30), wherein the oil-in-water emulsion contains a plant-based fermented milk;
(34) a method of producing an oil-in-water emulsion containing a plant-based milk and a randomly interesterified oil satisfying the following (A) and (B), the method including a fermentation step by microorganisms:
   (A) in a constituent fatty acid composition, saturated fatty acids content having from 6 to 10 carbon atoms is from 0.3 to 40 wt.%;
   (B) in a constituent fatty acid composition, saturated fatty acids content having from 12 to 14 carbon atoms is from 40 to 80 wt.%;
(35) a method of producing a food and beverage containing an oil-in-water emulsion prepared by using a randomly interesterified oil and/or fat satisfying the following (A) and (B):
   (A) in a constituent fatty acid composition, saturated fatty acids content having from 6 to 10 carbon atoms is from 0.3 to 40 wt.%;
   (B) in a constituent fatty acid composition, saturated fatty acids content having from 12 to 14 carbon atoms is from 40 to 80 wt.%;
(36) the method of producing a food and beverage according to (35), wherein the food and beverage contains a plant-based milk;
(37) the method of producing a food and beverage according to (35), wherein the food and beverage contains an animal protein;
(38) the method of producing a food and beverage according to (35), wherein the food and beverage contains a plant-based fermented milk;
(39) the method of producing a food and beverage according to (35), wherein a plant-based milk is used and the method further includes a fermentation step by microorganisms;
(40) the method of producing a food and beverage according to (36) or (37), wherein the food and beverage is a beverage, a whip cream, or a whitener;
(41) the method of producing a food and beverage according to (38) or (39), wherein the food and beverage is a plant-based yogurt, probiotic beverage, creams, ice creams, cheese, butter or margarine; and
(42) a method of suppressing a strange flavor of a food and beverage by incorporating an oil-in-water emulsion containing a randomly interesterified oil and/or fat satisfying the following (A) and (B):
   (A) in a constituent fatty acid composition, saturated fatty acids content having from 6 to 10 carbon atoms is from 0.3 to 40 wt.%;
   (B) in a constituent fatty acid composition, saturated fatty acids content having from 12 to 14 carbon atoms is from 40 to 80 wt.%.

In other words, the present invention relates to:
(51) an oil-in-water emulsion containing: a randomly interesterified oil and/or fat satisfying the following (A) and (B); and a plant-based milk:
   (A) in a constituent fatty acid composition, saturated fatty acids content having from 6 to 10 carbon atoms is from 0.3 to 30 wt.%;
   (B) in a constituent fatty acid composition, saturated fatty acids content having from 12 to 14 carbon atoms is from 45 to 80 wt.%;
(52) the oil-in-water emulsion according to (51), wherein the randomly interesterified oil and/or fat content is from 0.05 to 60 wt.% in oil and/or fat content (oil content) of the oil-in-water emulsion;
(53) the oil-in-water emulsion according to (51) or (52), wherein the randomly interesterified oil and/or fat further satisfies the following (C):
   (C) oleic acid content in the constituent fatty acid composition is 10 wt.% or less; (54) the oil-in-water emulsion according to any one of (51) to (53), wherein the plant-based milk is derived from one or more selected from almond, oat, and soybean;
(55) a method of producing the oil-in-water emulsion described in any one of (51) to (54);
(56) a method of suppressing a strange flavor in the oil-in-water emulsion described in any one of (51) to (54), wherein the oil-in-water emulsion contains the randomly interesterified oil and/or fat and the plant-based milk;
(61) an oil-in-water emulsion containing: a randomly interesterified oil satisfying the following (A) and (B); and an animal protein:
   (A) in a constituent fatty acid composition, saturated fatty acids content having from 6 to 10 carbon atoms is from 0.3 to 30 wt.%;
   (B) in a constituent fatty acid composition, saturated fatty acids content having from 12 to 14 carbon atoms is from 45 to 80 wt.%;
(62) the oil-in-water emulsion according to (61), wherein the randomly interesterified oil is added in an amount of 1.9 parts by weight or more per 100 parts by weight of the protein content in the oil-in-water emulsion;
(63) the oil-in-water emulsion according to (61) or (62), wherein the randomly interesterified oil further satisfies the following (C):
   (C) oleic acid content in the constituent fatty acid composition is 10 wt.% or less; (64) the oil-in-water emulsion according to any one of (61) to (63), wherein protein content in the oil-in-water emulsion is 2.2 wt.% or more;
(65) the oil-in-water emulsion according to any one of (61) to (64), wherein the animal protein is a milk protein;
(66) the oil-in-water emulsion according to any one of (61) to (65), wherein the oil-in-water emulsion is a beverage, a whip cream, or a whitener;
(67) a method of producing the oil-in-water emulsion described in any one of (61) to (66);
(68) a method of suppressing a strange flavor in the oil-in-water emulsion described in any one of (61) to (66), wherein the oil-in-water emulsion contains the randomly interesterified oil and the animal protein;
(71) a method of producing a plant-based fermented milk, including adding a randomly interesterified oil satisfying the following (A) and (B) to a fermentation raw material containing a plant-based milk in an amount of 30 parts by weight or more based on lipid content of the plant-based milk, and fermenting the mixture with microorganisms:
   (A) in a constituent fatty acid composition, saturated fatty acids content having from 6 to 10 carbon atoms is from 0.3 to 40 wt.%;
   (B) in a constituent fatty acid composition, saturated fatty acids content having from 12 to 14 carbon atoms is from 45 to 80 wt.%;
(72) a method of producing a plant-based fermented milk, including fermenting a fermentation raw material containing a plant-based milk with microorganisms, and adding a randomly interesterified oil satisfying the following (A) and (B) to the obtained plant-based fermented milk in an amount of 30 parts by weight or more based on lipid content of the plant-based fermented milk;
   (A) in a constituent fatty acid composition, saturated fatty acids content having from 6 to 10 carbon atoms is from 0.3 to 40 wt.%;
   (B) in a constituent fatty acid composition, saturated fatty acids content having from 12 to 14 carbon atoms is from 45 to 80 wt.%;
(73) the method of producing a plant-based fermented milk according to (71) or (72), wherein the randomly interesterified oil further satisfies the following (C):
   (C) oleic acid content in the constituent fatty acid composition is 10 wt.% or less; (74) the method of producing a plant-based fermented milk according to any one of (71) to (73), wherein the microorganisms are one or more selected from lactic acid bacteria, yeast, and koji;
(75) a method of producing a food and beverage, including incorporating the plant-based fermented milk obtained by the production method described in any one of (71) to (74); and
(76) the method of producing a food and beverage according to (75), wherein the food and beverage is a plant-based yogurt, probiotic beverage, creams, ice creams, cheese, butter or margarine.

### Advantageous Effects of Invention

According to the present invention, it is possible to provide a food and beverage in which a strange flavor derived from the food and beverage is suppressed. In addition, the strange flavor suppressing effect can be sufficiently exhibited by blending a small amount of a randomly interesterified oil and/or fat adjusted so as to have a specific fatty acid composition into an oil-in-water emulsion.

In addition, the present invention can also provide an oil-in-water emulsion having a well-balanced whole flavor, in which a rich flavor of a material therefor is maintained while strange flavors derived from food and beverages is suppressed.

### Description of Embodiments

The present invention will be described in detail below.

### Randomly interesterified oil and/or fat

The randomly interesterified oil and/or fat of the present invention is a randomly interesterified oil and/or fat satisfying the following (A) and (B):
(A) in a constituent fatty acid composition, saturated fatty acids content having from 6 to 10 carbon atoms is from 0.3 to 40 wt.%;
(B) in a constituent fatty acid composition, saturated fatty acids content having from 12 to 14 carbon atoms is from 40 to 80 wt.%.

Constituent fatty acids are measured according to the method of AOCS Official Method Ce 1h-05.

In the randomly interesterified oil and/or fat of the present invention, (A) the saturated fatty acids content having from 6 to 10 carbon atoms in the constituent fatty acid composition is preferably from 1 to 35 wt.%, more preferably from 3 to 35 wt.%, even more preferably from 5 to 25 wt.%, and still more preferably from 5 to 20 wt.%.

In the randomly interesterified oil and/or fat of the present invention, (B) the saturated fatty acids content having from 12 to 14 carbon atoms in the constituent fatty acid composition is preferably from 50 to 80 wt.%, and more preferably from 60 to 75 wt.%.

In the randomly interesterified oil and/or fat of the present invention, (C) the oleic acid content in the constituent fatty acid composition is preferably 10 wt.% or less, more preferably 9 wt.% or less, even more preferably 8 wt.% or less, and still more preferably 6 wt.% or less.

In the randomly interesterified oil and/or fat of the present invention, (D) the ratio of (the saturated fatty acids content having from 12 to 14 carbon atoms)/(the saturated fatty acids content having from 6 to 10 carbon atoms) is preferably from 1.0 to 6.0, more preferably from 1.0 to 5.0, even more preferably from 1.3 to 4.5, and still more preferably from 1.5 to 4.0.

A raw material for the randomly interesterified oil and/or fat of the present invention can be prepared by blending various amounts of oils and/or fats, and used as long as the above constitution is satisfied. Examples of usable oils and/or fats can include vegetable oils and/or fats such as soybean oil, rapeseed oil, corn oil, cottonseed oil, peanut oil, sunflower oil, rice oil, safflower oil, olive oil, sesame oil, palm oil, coconut oil, palm kernel oil, and medium-chain fatty acid-bound oils and/or fats (MCT), shea fat, and sal fat; animal oils and/or fats such as beef tallow, lard, and milk fat; algal oils; oils and/or fats derived from microbial fermentation; processed oils and/or fats obtained by fractionation, hydrogenation, interesterification or the like of these oils and/or fats; and mixed oils and/or fats of the foregoing.

Preferable examples of the raw material for the randomly interesterified oil and/or fat of the present invention can include coconut oil, palm kernel oil, MCT, milk fat, processed oils and/or fats obtained by fractionation, hydrogenation, interesterification or the like of these oils and/or fats, and further mixed oils and/or fats thereof.

The randomly interesterified oil and/or fat of the present invention is characterized in that the raw material oil and/or fat does not need to contain a non-lauric oil and/or fat as an essential component. A non-lauric oil and/or fat may be used as long as the effects of the present invention are not impaired. However, preferably, a non-lauric oil and/or fat is not used in the raw material oil and/or fat, as a more desirable aspect.

When a plant-based oil-in-water emulsion containing no animal raw material is obtained, the raw material for the randomly interesterified oil and/or fat is preferably a plant oil and/or fat.

An oil and/or fat containing lauric acid is preferably used, as an essential component, in the raw material for the randomly interesterified oil and/or fat of the present invention. In this case, a lauric acid-containing oil and/or fat having an iodine value (IV) of preferably 10 or less, more preferably 5 or less, and even more preferably 1 or less is preferably used.

### <Oil-in-water emulsion>

The oil-in-water emulsion of the present invention is required to contain the above-described randomly interesterified oil and/or fat, but can contain a plant-based milk, a plant-based fermented milk, an animal protein, or the like, which will be described later, depending on the application. In addition, the oil-in-water emulsion containing the randomly interesterified oil and/or fat can have suppressed strange flavors derived from these materials.

An example of an aspect will be described below, but the present invention is not limited thereto, and the oil-in-water emulsion containing the randomly interesterified oil and/or fat enables suppression of a strange flavor of a food and beverage.

### <Plant-based milk-containing oil-in-water emulsion>

### (Plant-based milk)

The plant-based milk according to the present invention refers to a product obtained by using a plant raw material as a basic raw material (emulsion-like liquid). The type of plant to be used as the raw material is not limited, and examples of the plant include seeds such as almond, hazelnut, cashew, walnut, peanut, and pistachio; beans such as soybean, pea, hemp, lupin bean, fava bean, and chickpea; grains such as rice and oat; quinoa; coconut; and linseed. Among them, almond, oat, and soybean are suitable. In addition, these plants can be mixed and used in appropriate proportions.

In addition, the method of producing the plant-based milk is not particularly limited, and examples thereof include those obtained by steps such as pulverization of raw materials, immersion/dissolution, mixing/stirring, filtration, homogenization, and sterilization. A paste obtained by pulverizing a raw material, a liquid obtained by dissolving a powdered raw material in water or the like, and a substance containing an insoluble fraction derived from a raw material can also be used as the plant-based milk. Further, as the plant-based milk, a plant-based milk provided by a raw material maker or a commercially available plant-based milk may be purchased and used in the present invention. As another example, soybean milk obtained by dissolving soybean powder in water can also be used.

The plant-based milk content in the oil-in-water emulsion is preferably 0.1 wt.% or more. The content is preferably from 1 to 90 wt.%, and more preferably from 5 to 80 wt.%.

When the plant-based milk is used as a fermentation raw material, lipid content of the plant-based milk is not limited. However, the effects of the present invention are more likely to be exhibited when the lipid content is higher, and the lipid content is preferably 3 wt.% or more, and more preferably 10 wt.% or more in the solid content of the plant-based milk.

In a preferred aspect, the plant-based milk has a slight strange flavor such as a bean smell or a grain smell. By blending the randomly interesterified oil and/or fat of the present invention together with the plant-based milk into the oil-in-water emulsion, the strange flavor derived from the plant-based milk is easily suppressed. For example, a bitter grain smell is detected from almond milk and a grassy grain smell is detected from oat milk. However, by blending a certain amount of the randomly interesterified oil and/or fat, these strange flavors are remarkably suppressed, and an emulsion is obtained, which has a good whole flavor and which is good in development of flavor release derived from each plant-based milk detected immediately after eating or drinking and a rich feeling detected in the latter half, leading to a rich flavor. In addition, although soymilk has a grassy smell and a bean smell, an oil-in-water emulsion containing soymilk is also suppressed in a strange flavor by a simple method of blending the randomly interesterified oil and/or fat, the rich feeling of soymilk is not impaired, and the flavor of the whole emulsion is considerably good.

The plant-based milk-containing oil-in-water emulsion contains the plant-based milk in addition to the randomly interesterified oil and/or fat. The inclusion of the randomly interesterified oil and/or fat in the plant-based milk-containing oil-in-water emulsion can suppress the strange flavor derived from the plant-based milk and can provide an oil-in-water emulsion in which the flavor release and thickness of the plant-based milk are maintained.

In an aspect of the plant-based milk-containing oil-in-water emulsion, the oil-in-water emulsion contains the plant-based milk and the randomly interesterified oil and/or fat, but the oil and/or fat to be contained therein does not have to be only the randomly interesterified oil and/or fat. As long as the randomly interesterified oil and/or fat is contained at least in an amount of 0.05 wt.% or more in the oil and/or fat content (oil content) of the oil-in-water emulsion, a vegetable oil and/or fat may be separately contained. Alternatively, an aspect in which only the randomly interesterified oil and/or fat is contained may be used. The content is more preferably from 0.05 to 60 wt.%, even more preferably from 0.1 to 58 wt.%, still more preferably from 1.0 to 55 wt.%, and most preferably from 2.0 to 10 wt.%. The vegetable oil and/or fat is not particularly limited, and examples thereof include coconut oil, palm oil, palm kernel oil, rapeseed oil, and sunflower oil. Coconut oil, palm oil, and their fractionated oils and hydrogenated oils are more preferable, and, in particular, the flavor release and rich feeling possessed by the plant-based milk are well developed, and the flavor of the whole oil-in-water emulsion is improved. In addition, the oil-in-water emulsion of the present invention may contain one or more raw materials selected from animal raw materials, plant raw materials, and animal raw materials and plant raw materials derived from microbial fermentation, but, in the case of obtaining a plant-based oil-in-water emulsion containing no animal raw material, plant raw materials are preferable.

The oil and/or fat content (oil content) of the plant-based milk-containing oil-in-water emulsion is not particularly limited, and is, for example, from 0.01 to 65 wt.% in total with the oil content derived from the plant-based milk. It is more preferably from 0.05 to 60 wt.%. When the oil content of the oil-in-water emulsion is within this range, a stable emulsion is obtained.

The plant-based milk-containing oil-in-water emulsion may contain an auxiliary raw material, if necessary. Examples of the auxiliary raw material include milk raw materials (raw milk, raw milk, skimmed concentrated milk, skimmed milk powder, heavy cream, butter, and the like); carbohydrate sweeteners (sugar, starch syrup, fructose, glucose, sugar alcohol, trehalose, and the like); stabilizers (guar gum, locust bean gum, xanthan gum, gum arabic, carrageenan, sodium alginate, CMC, water-soluble cellulose, gelatin, pectin, and the like); starches (starches derived from grains such as rice, wheat, and rice, starches derived from corn, starches derived from potatoes such as white potato and tapioca, and the like, or processed starches and modified starches thereof, and the like); emulsifiers (lecithin, sucrose fatty acid ester, propylene glycol fatty acid ester, sorbitan fatty acid ester, glycerin fatty acid ester, polyglycerin fatty acid ester, organic acid monoglyceride, and the like); table salt; flavoring agents; coloring agents; acidulants; flavor raw materials (coffee, cocoa, tea, chocolate raw material, fruit juice, fruit pulp, seeds, honey, maple syrup, alcoholic beverages, and the like); and various nutrients (protein, amino acid, dietary fiber such as polydextrose, inulin, and indigestible dextrin, vitamins, minerals, and the like).

### Method of producing plant-based milk-containing oil-in-water emulsion

The method of producing a plant-based milk-containing oil-in-water emulsion according to the present invention includes a step of mixing and emulsifying the plant-based milk and the randomly interesterified oil and/or fat. Furthermore, the plant-based milk and the randomly interesterified oil and/or fat may be mixed with the vegetable oil and/or fat other than the randomly interesterified oil and/or fat. The plant-based milk is mixed in an aqueous phase and the randomly interesterified oil and/or fat is mixed in an oil phase, together with other raw materials. The mixing method in the emulsification step is not particularly limited, and a commonly used stirring means, for example, manual stirring using a stirring bar or the like, mechanical stirring equipped with a stirrer or a stirring blade, an ultrasonic disperser, or the like can be used. Among them, mechanical stirring is generally used. Examples of the mechanical stirring include a homomixer, a homogenizer, a homodisper, a Henschel mixer, a Banbury mixer, a Bonmixer, a V-type mixer, and an in-line mixer. When mechanical stirring is used, a stirring speed can be appropriately selected depending on an amount to be treated. A heating temperature in the emulsification step is, for example, from about 50°C to about 90°C. The obtained oil-in-water emulsion may be subjected to an aging step of performing an aging treatment for the purpose of stabilizing a crystalline state of the oil and/or fat and adjusting the viscosity to an appropriate level. The resultant oil-in-water emulsion may be or may not be subjected to a sterilization treatment, as needed. Quality deterioration can be suppressed even when a sterilization treatment is performed, and examples of the sterilization method include a heat treatment.

The oil-in-water emulsion obtained through the emulsification step can be further subjected to a whipping step to prepare a whipped cream (whip cream after whipping). In the whipping step, the emulsion obtained in the emulsifying step is partially demulsified, and the composition is aerated to obtain a whipped cream.

The oil-in-water emulsion obtained through the emulsification step is subjected to a freezing step and a hardening step to prepare a frozen dessert. In the freezing step, an appropriate amount of air is mixed into a mixed liquid while a water content is frozen by rapidly cooling the mixed liquid by a freezer, and fine air bubbles, ice crystal grains, and fat particles are dispersed in the mixed liquid to form a semi-fluid soft ice cream. In the hardening step, this product is filled, molded, and packaged, then rapidly cooled to from -20°C to -40°C, and frozen while a constant shape is retained.

Examples of preparation of a whipped cream produced from almond milk can include the following preparation method. The randomly interesterified oil and/or fat and other oils and/or fats are warmed and molten, and an oil-soluble emulsifier or the like is added thereto and mixed and dissolved to prepare an oil phase. Separately, a water-soluble component or the like is mixed and dissolved in warm water to prepare an aqueous phase. The oil phase and the aqueous phase are combined in an emulsifying tank, preliminarily emulsified with a homomixer at 65°C for 30 minutes, and homogenized (pressure: 4 Mpa). Thereafter, the product is subjected to a sterilization treatment in an ultra-high temperature sterilization facility (144°C for 4 seconds) and immediately cooled to obtain a whipped cream produced from almond milk, which is suppressed in strange flavor, and has a rich feeling and a good flavor release. The above-described auxiliary raw materials and the like can be appropriately used.

### <Plant-based fermented milk-containing oil-in-water emulsion>

### (Plant-based fermented milk)

The plant-based fermented milk in the present invention refers to a plant-based fermented milk obtained through fermentation of the plant-based milk by microorganisms such as lactic acid fermentation. The product is a solid, paste or liquid yoghurt-like or cheese-like product.

Here, the term "plant-based" in the present invention does not mean that an animal raw material is not contained at all, and specifically means that the animal-derived raw material accounts for less than 50 wt.% in all raw materials. In a more preferred aspect, the animal-derived raw material accounts for 40 wt.% or less, 30 wt.% or less, 20 wt.% or less, 10 wt.% or less, or 0 wt.% in all raw materials.

The plant-based fermented milk-containing oil-in-water emulsion contains the randomly interesterified oil and/or fat, and the inclusion of the randomly interesterified oil and/or fat can suppress the strange flavor derived from the fermentation of the plant-based milk in the plant-based fermented milk-containing oil-in-water emulsion.

In an aspect of the plant-based fermented milk-containing oil-in-water emulsion of the present invention, the randomly interesterified oil and/or fat may be contained in the oil-in-water emulsion. Specifically, the effects of the present invention can be obtained also when microbial fermentation is performed by adding the randomly interesterified oil and/or fat to the plant-based milk before the microbial fermentation, when the randomly interesterified oil and/or fat is added to the plant-based fermented milk after microbial fermentation, or when microbial fermentation is performed by adding a part of the randomly interesterified oil and/or fat to the plant-based milk before the microbial fermentation and adding the rest of the randomly interesterified oil and/or fat after the microbial fermentation. Furthermore, the case where the oil-in-water emulsion containing the randomly interesterified oil and/or fat and the plant-based milk is subjected to microbial fermentation is also included in the present invention.

In the case of an aspect of the plant-based fermented milk-containing oil-in-water emulsion, an amount of the randomly interesterified oil and/or fat to be added to the oil-in-water emulsion is 30 parts by weight or more, preferably from 50 to 200 parts by weight, more preferably from 50 to 180 parts by weight, and even more preferably from 50 to 150 parts by weight, based on the lipid derived from the plant-based milk. Thus, it is possible to effectively suppress the deterioration smell generated by fermentation.

Here, the oil and/or fat contained in the plant-based fermented milk-containing oil-in-water emulsion does not necessarily have to be only the randomly interesterified oil and/or fat, and other oils and/or fats may be used in combination as long as the randomly interesterified oil and/or fat is contained at least in an amount of 30 parts by weight or more based on the lipid derived from the plant-based milk.

### (Method of producing plant-based fermented milk-containing oil-in-water emulsion)

The method of producing a plant-based fermented milk-containing oil-in-water emulsion of the present invention can be exemplified as follows.

### (Fermentation)

### ■ Assimilable sugar

At least the plant-based milk is contained as the fermentation raw material of the present invention. It is not essential to add an assimilable sugar as a nutrient source for microorganisms such as lactic acid bacteria and yeast, but it is preferable to add it when the fermentation is difficult to proceed. For example, glucose, fructose, sucrose, maltose, galactose, lactose, raffinose, trehalose, soybean oligosaccharide, fructooligosaccharide, xylooligosaccharide and the like can be used. These sugar raw materials may be used alone, or two or more thereof may be used in combination. When the assimilable sugar is added, an amount thereof to be blended is appropriately from 0.1 to 5 wt.%, and preferably from 0.5 to 3 wt.%.

### (Fermentation)

### ■ Other fermentation raw materials

As the fermentation raw material of the present invention, additionally, starch, a thickening polysaccharide, a gelling agent, an emulsifier, a perfume, an acidulant, an antioxidant, a chelating agent and the like can be appropriately added, if necessary.

### (Fermentation by microorganisms)

The microorganisms to be used in the fermentation of the present invention are not particularly limited as long as they are microorganisms generally utilized in the production of fermented foods, and, for example, lactic acid bacteria, bifidobacteria, yeast, koji mold, natto bacteria, tempeh fungus and the like can be used alone or in an appropriate combination. In certain aspects, lactic acid bacteria are preferably used. In certain aspects, lactic acid bacteria and yeast are preferably used.

### (Lactic acid bacteria)

In the present invention, lactic acid bacteria (including bifidobacteria) used in lactic acid fermentation are not particularly limited. They are not particularly limited as long as they are used in fermented milk products such as usual yogurt, probiotic beverages, and cheese.

Examples of the lactic acid bacteria include Lactobacillus such as Lactobacillus casei, Lactobacillus plantarum, Lactobacillus helveticus and Lactobacillus bulgaricus; Streptococcus such as Streptococcus thermophilus, Streptococcus lactis and Streptococcus diacetylactis; Lactococcus such as Lactococcus lactis subsp. lactis, Lactococcus lactis subsp. lactis biovar. diacetylactis and Lactococcus lactis subsp. cremoris; Leuconostoc such as Leuconostoc mesenteroides subsp. cremoris and Leuconostoc lactis; and Bifidobacterium such as Bifidobacterium bifidum, Bifidobacterium longum, Bifidobacterium infantis and Bifidobacterium breve. It is also possible to use a starter mixed with microorganisms such as yeast other than lactic acid bacteria such as Kefir bacteria. Two or more of these lactic acid bacteria may be arbitrarily used in combination.

Specific bacterial strains used in commercially available yogurts and probiotic beverages or specific known bacterial strains, such as Lactobacillus casei (YIT 9029 strain (Shirota strain), YIT10003 strain, NY1301 strain, SBR1202 strain), Lactobacillius mali YIT0243 strain, Lactobacillus acidophilus (SBT-2062 strain, CK92 strain), Lactobacillus helveticus CK60 strain, Lactobacillus gasseri (SP strain (SBT2055SR), LG21 strain, LC1 strain, OLL 2716 strain, FERMP-17399 and the like), Lactobacillus delbrueckii subsp. bulgaricus (OLL 1023 strain, OLL 1029 strain, OLL 1030 strain, OLL 1043 strain, OLL 1057 strain, OLL 1073R-1 strain, OLL 1075 strain, OLL 1083 strain, OLL 1097 strain, OLL 1104 strain, OLL 1162 strain, 2038 strain), Lactobacillus johnsonii La1 strain (LC1 strain), Lactobacillus GG strain, Streptococcus thermophilus (1131 strain, OLS 3059 strain), Bifidobacterium breve (Yakult strain, YIR4065 strain), Bifidobacterium bifidum (Yakult strain), Bifidobacterium longum (SP strain (SBT2928), BB536 strain, BE80 strain, FERM BP-7787 strain), and Bifidobacterium lactis (FK120 strain, LKM512 strain, Bb-12 strain), can be suitably used.

### (Yeast)

The yeasts include, in addition to yeasts (Saccharomyces cerevisiae) used for fermentation of breads, yeasts derived from bread starters used as sour starters (San Francisco sour starters, rye sour starters, Panettone starters and the like), hop yeasts, beer yeasts, liquor yeasts, and fruits yeasts (grape yeasts, apple yeasts and the like) used as leaven. In certain aspects, Kluyveromyces marxianus can be used.

### Koji mold

Examples of the koji mold include, but are not limited to, Aspergillus such as Aspergillus oryzae, Aspergillus niger, Aspergillus sojae, Aspergillus kawachii, and Aspergillus awamori; Monascus such as Monascus anka and Monascus purpureus; Neurospora; Rhizopus such as Rhizopus japonicus; and Mucor such as Mucor rouxii.

### (Tempeh fungus)

As the tempeh fungus, Rhizopus such as Rhizopus oligosporus and Rhizopus oryzae can be used.

### (Fermentation condition)

The fermentation conditions are not particularly limited as long as the microorganisms to be used can proliferate.

When lactic acid bacteria are used, the conditions for lactic acid fermentation can be appropriately changed depending on the type of lactic acid bacteria to be used. A fermentation temperature of lactic acid bacteria can be, for example, from 20 to 50°C, preferably from 25 to 45°C. In the case of cheese, the fermentation may be performed at a slightly lower temperature ranging from 10 to 50°C, preferably 15 to 45°C. A fermentation time may be, for example, from 4 to 72 hours, preferably from 5 to 60 hours. The lactic acid fermentation can be performed until the pH of the fermentation raw material is lowered to from 3 to 6, and, if necessary, from 3 to 5. After completion of the fermentation, the pH can be appropriately finely adjusted to a target pH with an alkali, an organic acid, an inorganic acid, or the like. The fermentation can be performed in an apparatus similar to that used in producing milk yogurt or cheese.

When yeast is used, a fermentation temperature may be, for example, from 8 to 40°C, preferably from 15 to 35°C, and more preferably from 20 to 28°C. A fermentation time may be, for example, from 12 hours to 10 days, preferably from 16 hours to 5 days, and more preferably from 3 days (about 72 hours) to 5 days. In addition, the fermentation can be performed under aerobic conditions for the purpose of keeping an ethanol concentration low, and, if necessary, sufficient aeration and/or stirring can be performed for yeast fermentation.

When koji is used, fermentation conditions can be appropriately changed depending on the type of koji to be used. A fermentation temperature of koji can be, for example, from 20 to 60°C, preferably from 30 to 50°C. A fermentation time may be, for example, from 4 to 72 hours, preferably from 5 to 24 hours.

### (Post-fermentation step)

After the fermentation step such as lactic acid fermentation, a solid, paste or liquid yoghurt-like product can be prepared by an ordinary method through a filtration step, a homogenization step or a heat sterilization step, if necessary. A solid or paste cheese-like product can be prepared by an ordinary method.

### <Animal protein-containing oil-in-water emulsion>

### (Animal protein)

The type of animal protein in the present invention is not limited, and examples thereof include collagen, gelatin, and a milk protein derived from microbial milk protein fermentation, and milk protein is particularly preferable regardless of the production method. These proteins can be mixed and used in appropriate proportions. Also, decomposition products of these proteins can be used. The milk protein is, for example, various proteins contained in milk and compositions containing them, including casein, α-lactalbumin, β-lactoglobulin, lactoferrin, whey protein concentrate (WPC), total milk protein (TMP), and milk protein peptide. Casein includes lactic acid casein, acid casein, rennet casein, caseinate, and casein decomposition products. Examples of raw materials containing them can include raw milk, cow milk, skimmed milk, heavy cream, concentrated milk, sugar-free condensed milk, sugar-added condensed milk, whole milk powder, skimmed milk powder, butter milk powder, whey protein, acid casein, rennet casein, caseins such as sodium casein, calcium casein and potassium casein, and total milk protein milk.

Protein content in the oil-in-water emulsion of the present invention is not limited, but is preferably 2.2 wt.% or more, more preferably 2.5 wt.%, even more preferably 3 wt.%, and still more preferably 4 wt.% because the effects of the present invention are more easily exhibited when the protein content is higher. The upper limit is preferably 20 wt.% or less, more preferably 15 wt.% or less, and even more preferably 13 wt.% or less.

The animal protein-containing oil-in-water emulsion contains the randomly interesterified oil and/or fat, and the inclusion of the randomly interesterified oil and/or fat can suppress the strange flavor derived from the animal protein in the animal protein-containing oil-in-water emulsion, thereby improving the flavor of the whole oil-in-water emulsion.

In an aspect of the animal protein-containing oil-in-water emulsion, an amount of the randomly interesterified oil and/or fat to be added is 1.9 parts by weight or more, preferably from 9 to 2000 parts by weight or more, more preferably from 45 to 500 parts by weight, and even more preferably from 45 to 200 parts by weight, relative to 100 parts by weight of the protein content in the oil-in-water emulsion. As a result, the strange flavor derived from the milk protein can be effectively suppressed. Here, the oil and/or fat contained in the oil-in-water emulsion does not necessarily have to be only the randomly interesterified oil and/or fat, and other oils and/or fats may be used in combination as long as the randomly interesterified oil and/or fat is contained at least in an amount of 1.9 parts by weight or more based on the protein content in the oil-in-water emulsion.

In the aspect of the animal protein-containing oil-in-water emulsion, the oil-in-water emulsion may contain an auxiliary raw material in addition to the protein and the oil and/or fat. As the auxiliary raw material, necessary food raw materials (fruit juice, fruit pulp, vegetables, sugars, dairy products, grain flours, starches, cacao mass, bird, beast and fish meat products, seasonings, and the like) and food additives (emulsifiers, salts, minerals, vitamins, thickening stabilizers, acidulants, perfumes, and the like) can be appropriately used.

### (Method of producing animal protein-containing oil-in-water emulsion)

The method of producing an animal protein-containing oil-in-water emulsion of the present invention can be exemplified as follows.

### O Mixing and homogenization

An aqueous phase portion can be prepared in any temperature range. In a more specific embodiment, in a case where the aqueous phase portion contains a hydrophilic emulsifier or carbohydrate whose solubility is improved by heating, the aqueous phase portion can be prepared by dissolution or dispersion in a temperature range of, for example, 20 to 70°C, preferably 55 to 65°C. The raw materials to be added to the aqueous phase portion can be appropriately determined by those skilled in the art. For example, in a case where salts or water-soluble flavors are added, they are added to the aqueous phase portion.

The oil phase portion can be prepared by mixing an oil-soluble material containing an oil and/or fat and dissolving or dispersing the oil-soluble material in a temperature range of, for example, from 50 to 80°C, preferably from 55 to 70°C. The raw materials to be added to the oil phase portion can be appropriately determined by those skilled in the art. For example, in a case of using a lipophilic emulsifier, it is added to a part of the raw material oil and/or fat or the oil phase portion.

The resultant oil phase portion and the resultant aqueous phase portion are warmed to, for example, 40 to 80°C, preferably 55 to 70°C, mixed, and subject to preliminary emulsification. The preliminary emulsification can be carried out using a rotary stirrer such as a homomixer. After the preliminary emulsification, the mixture is homogenized by a homogenizing apparatus such as a homogenizer. A pressure during homogenization by the homogenizer can be from 2 to 20 Mpa, preferably from 3 to 10 Mpa.

### O Heat Sterilization

The resultant composition may be or may not be subjected to a heat sterilization treatment, as needed. In a case of performing the heat sterilization treatment, for example, the treatment is performed using a UHT sterilization treatment method by an indirect heating method or a direct heating method, and as needed, homogenization is performed again with a homogenizer, and cooling is performed to from 2 to 15°C or the like. The heat sterilization can be performed at a temperature of, for example, from 110 to 150°C, preferably from 120 to 148°C, and for a time of, for example, from 1 to 10 seconds, preferably from 3 to 7 seconds.

### <Food and beverage>

The food and beverage of the present invention are characterized in that the oil-in-water emulsion containing the randomly interesterified oil and/or fat is used as a raw material. In particular, when the plant-based milk-containing oil-in-water emulsion, the plant-based fermented milk-containing oil-in-water emulsion, or the animal protein-containing oil-in-water emulsion is used as a raw material for a food and beverage, generation of strange flavors derived from various materials is suppressed, and a food and beverage having a good whole flavor can be obtained.

The form of the food and beverage is not particularly limited, and can be a product form including, for example, vegetable milks such as soymilk and beverages such as soft drinks; fresh confections such as puddings, bavarois, jellies, whiteners, whip creams and fillings; fermented foods such as yogurts, cheeses and fermented beverages; Japanese confectioneries such as sweet rice dumplings and buns with a bean-jam filling; puffed confectioneries such as snacks; bakery products such as biscuits, cookies, breads and cakes; seasonings such as chocolate, margarine, butter, spreads and mayonnaise; sauces; soups; fried foods; fish paste products; and bird, beast and fish meat products. In certain aspects, the food and beverage are preferably composed of plant-based raw materials.

In addition, to the plant-based fermented milk which does not contain the randomly interesterified oil and/or fat at all or contains less than 30 parts by weight thereof based on the lipid derived from the plant-based milk, the randomly interesterified oil can also be added at least in an amount of 30 parts by weight or more based on the lipid derived from the plant-based milk in accordance with the production of the food and beverage.

In the production of various products, in addition to the plant-based milk, the plant-based fermented milk, and the animal protein, necessary food raw materials (fruit juice, fruit pulp, vegetables, sugars, oils and/or fats, dairy products, grain flours, starches, cacao mass, bird, beast and fish meat products, and the like) and food additives (minerals, vitamins, emulsifiers, thickening stabilizers, acidulants, perfumes, and the like) can be appropriately used.

The plant-based fermented milk of the present invention can also be used as a raw material for non-food products such as chemical products such as soaps and shampoos, and cosmetics such as lotions, in addition to the above-described food and beverage.

The method of suppressing strange flavors derived from food and beverages according to the present invention can exhibit the effect of suppressing the strange flavor derived from the food and beverage by incorporating the oil-in-water emulsion containing the randomly interesterified oil and/or fat in the food and beverage.

In the method of suppressing a strange flavor derived from a plant-based milk by a plant-based milk-containing oil-in-water emulsion, the contents of the randomly interesterified oil and/or fat and the plant-based milk, and the method of preparing the oil-in-water emulsion are as described in the other items.

In the method of suppressing a strange flavor derived from a plant-based fermented milk, the contents of the randomly interesterified oil and/or fat and the plant-based fermented milk, and the method of preparing the plant-based fermented milk are as described in the other items.

In the method of suppressing a strange flavor derived from an animal protein by an animal protein-containing oil-in-water emulsion, the contents of the randomly interesterified oil and/or fat and the animal protein, and the method of preparing the oil-in-water emulsion are as described in the other items.

### (Example)

The present invention will be described in more detail below. Note that in the following description, "part(s)" and "%" mean weight basis unless otherwise specified.

### <Preparation of randomly interesterified oil and/or fat>

According to the formulations presented in Table 1, randomly interesterified oils and/or fats were prepared by the following method. That is, each of the oils and/or fats was mixed, a random interesterification reaction was performed at 80°C using sodium methylate, and then water washing/decoloring/deodorization was performed according to an ordinary method to obtain randomly interesterified oils and/or fats E1 to E8. The oils and/or fats used in the study were all available from Fuji Oil Co., Ltd. MCT-64 (available from Fuji Oil Co., Ltd.) containing n-octanoic acid (8 carbon atoms) and n-decanoic acid (10 carbon atoms) as constituent fatty acids at a weight ratio of 60: 40 was used as the medium-chain fatty acids-bound oil and/or fat. The iodine values (IV) of the oils and/or fats used in the study are presented in Table 1. The fatty acid compositions of the oils and/or fats for the study were analyzed according to the method of AOCS Official Method Ce 1h-05. The compositions of the randomly interesterified oils and/or fats are presented in Table 1.

**[Table 1]**

| | | Randomly interesterified oil and/or fat E1 | Randomly interesterified oil and/or fat E2 | Randomly interesterified oil and/or fat E3 | Randomly interesterified oil and/or fat E4 | Randomly interesterified oil and/or fat E5 | Randomly interesterified oil and/or fat E6 | Randomly interesterified oil and/or fat E7 | Randomly interesterified oil and/or fat E8 |
|---|---|---|---|---|---|---|---|---|---|
| Formulation [%] | Palm kernel stearin extremely hydrogenated oil (iodine value <1) | 80 | 90 | 95 | | | | | |
| | Palm kernel (iodine value 7) | | | | 80 | 90 | | | |
| | Palm kernel extremely hydrogenated oil (iodine value <4) | | | | | | 80 | | |
| | Palm kernel oil (iodine value 17.5) | | | | | | | 95 | |
| | Hydrogenated coconut oil (iodine value <1) | | | | | | | | 80 |
| | Medium-chain fatty acids-bound oil and/or fat (iodine value <1) | 20 | 10 | 5 | 20 | 10 | 20 | 5 | 20 |
| Composition [%] | C6 | 0.0 | 0.1 | 0.1 | 0.1 | 0.1 | - | 0.1 | 0.4 |
| | C8 | 10.1 | 6.1 | 3.7 | 10.2 | 5.7 | 14.4 | 5.2 | 15.3 |
| | C10 | 9.3 | 5.9 | 4.2 | 9.1 | 5.7 | 10.5 | 4.8 | 12.5 |
| | C12 | 473 | 50.9 | 53.4 | 46.6 | 51.4 | 37.9 | 46.3 | 39.7 |
| | C14 | 18.6 | 20.4 | 21.3 | 18.6 | 20.5 | 13.4 | 15.7 | 15.4 |
| | C18:1 | 0.0 | 0.1 | 0.1 | 5.3 | 5.8 | 1.8 | 14.6 | 0.0 |
| | Total of unsaturated fatty acids | 0.0 | 0.2 | 0.2 | 6.2 | 6.8 | 1.9 | 17 | 0.0 |
| | (A) Total of C6 to C10 | 194 | 12.1 | 8.0 | 19.4 | 11.5 | 24.9 | 10.1 | 28.2 |
| | (B) Total of C12 to C14 | 65.9 | 71.3 | 74.7 | 65.2 | 71.9 | 51.4 | 62.0 | 55.1 |
| | (C) C18:1 | 0.0 | 0.1 | 0.1 | 5.3 | 5.8 | 1.8 | 14.6 | 0.0 |
| | (D) (Total of C12 to C14) / (total of C6 to C10) ratio | 340 | 5.89 | 9.34 | 3.36 | 6.25 | 2.06 | 6.14 | 1.95 |

### <Study 1> Study on plant-based milk-blended oil-in-water emulsion

### <Study 1-1> Study on almond milk-blended oil-in-water emulsion

### (Preparation of oil and/or fat for study)

In this study, the randomly interesterified oils and/or fats E1 to E3 were used. In addition, coconut oil, hydrogenated coconut oil, and palm middle-melting-point oil (iodine value 46) were used (all available from Fuji Oil Co., Ltd.).

### (Preparation of oil-in-water emulsion using almond milk)

An oil-in-water emulsion of almond milk was obtained by the following preparation method.
1. While 99 parts (Comparative Examples 1-1 and 1-2, and Examples 1-1 to 1-6) or 97 parts (Comparative Example 1-3, and Examples 1-7 and 1-8) of a commercially available almond milk beverage (available from Ezaki Glico Co., Ltd., Almond Effect (sugarless), lipid content: 1.5%) was mixed with a homomixer (5000 rpm at 60°C), 1 part (Comparative Examples 1-1 and 1-2, and Examples 1-1 to 1-6) or 3 parts (Comparative Example 1-3, and Examples 1-7 and 1-8) of the oil and/or fat presented in Table 2 was added thereto.
2. The mixture was stirred for 20 minutes.
3. The solutions obtained in 2 were passed through a high-pressure homogenizer (15 Mpa) to obtain oil-in-water emulsions for tasting.

The amounts of the oils and/or fats for study blended in the oil and/or fat content (oil content) of the oil-in-water emulsions are presented in Table 2.

### (Evaluation method)

The presence or absence of the strange flavor derived from the plant-based milk and the flavor intensity were evaluated as follows. Sensory evaluation was conducted by 16 panelists, and the oil-in-water emulsions determined to have Score 3 or higher in each evaluation by mutual agreement of the panelists were evaluated as acceptable in overall evaluation (expressed as "○"). The evaluation results are listed in Table 2.

### O Presence or absence of almond milk-derived strange flavor (grain smell accompanied by bitterness)

Score 1: A strange flavor was considerably detected.
Score 2: The strange flavor was detected.
Score 3: The strange flavor was detected slightly, but the emulsion had an acceptable flavor for eating/drinking.
Score 4: No strange flavor was detected.
Score 5: No strange flavor was detected at all.

### O Flavor intensity (intensity of flavor release detected immediately after eating/drinking and intensity of rich feeling derived from almond milk detected in latter half)

Score 1: Flavor release was considerably weak, and no rich feeling derived from almond milk was detected at all.
Score 2: Flavor release was weak, and a rich feeling derived from almond milk was slightly detected.
Score 3: Flavor release was developed, and the rich feeling derived from almond milk was detected.
Score 4: Flavor release was strong, and the rich feeling derived from almond milk was detected well.
Score 5: The flavor release was considerably strong, the rich feeling derived from almond milk was also strongly detected, and the flavor of the whole emulsion was considerably good.

**[Table 2]**

| | Oil and/or fat species | Amount [wt.%] of oil and/or fat for study blended in oil and/or fat content (oil content) of oil-in-water emulsion | Development of strange flavor | Flavor intensity | Overall evaluation |
|---|---|---|---|---|---|
| Comparative Example 1-1 | Coconut oil | - | 1 | 4 | × |
| Comparative Example 1-2 | Hydrogenated coconut oil | - | 2 | 5 | × |
| Example 1-1 | Randomly interesterified oil and/or fat E1 | 2.44 | 5 | 3 | ○ |
| Example 1-2 | Randomly interesterified oil and/or fat E2 | 2.44 | 5 | 3 | ○ |
| Example 1-3 | Randomly interesterified oil and/or fat E3 | 2.44 | 5 | 3 | ○ |
| Example 1-4 | E1/palm middle-melting-point oil = 10/90 | 0.24 | 4 | 4 | ○ |
| Example 1-5 | E2/palm middle-melting-point oil = 10/90 | 0.24 | 4 | 4 | ○ |
| Example 1-6 | E3/palm middle-melting-point oil = 10/90 | 0.24 | 4 | 4 | ○ |
| Comparative Example 1-3 | Coconut oil | - | 1 | 4 | × |
| Example 1-7 | Randomly interesterified oil and/or fat E1 | 4.41 | 5 | 3 | ○ |
| Example 1-8 | E1/palm middle-melting-point oil = 10/90 | 0.44 | 4 | 4 | ○ |

In both Comparative Examples 1-1 and 1-3 in which 1 part or 3 parts of coconut oil was blended in the almond milk-blended oil-in-water emulsion, the flavor release and rich feeling derived from almond milk were detected, but the strange flavor was considerably detected. The hydrogenated coconut oil-blended oil-in-water emulsion exhibited the same tendency as coconut oil-blended ones (Comparative Example 1-2).

In Examples 1-1 to 1-8 in which each of the randomly interesterified oils and/or fats or each of the randomly interesterified oils and/or fats and the palm middle-melting-point oil was/were blended, the flavor release and rich feeling derived from almond milk were detected, while the strange flavor was not detected at all. When the randomly interesterified oil and/or fat was used in combination with the palm middle-melting-point oil, a well-balanced good-flavor emulsion was obtained.

### <Study 1-2> Study on oat milk-blended oil-in-water emulsion

### (Oil and/or fat for study)

In this study, the randomly interesterified oil and/or fat E1 was used. In addition, coconut oil and palm middle-melting-point oil were used.

### (Preparation of oil-in-water emulsion using oat milk)

An oil-in-water emulsion of oat milk was obtained by the following preparation method.
1. While 99 parts of a commercially available oat milk beverage (available from Dannon Japan Co., Ltd., alpro (sugarless), lipid content: 1.4%) was mixed with a homomixer (5000 rpm at 60°C), 1 part of the oil and/or fat presented in Table 2 was added thereto.
2. The mixture was stirred for 20 minutes.
3. The solutions obtained in 2 were passed through a high-pressure homogenizer (15 Mpa) to obtain oil-in-water emulsions for tasting.

The amounts of the oils and/or fats for study blended in the oil and/or fat content (oil content) of the oil-in-water emulsions are presented in Table 3.

### Evaluation Method

The presence or absence of the strange flavor derived from the plant-based milk and the flavor intensity were evaluated as follows. Sensory evaluation was conducted by 13 panelists, and the oil-in-water emulsions determined to have Score 3 or higher in each evaluation by mutual agreement of the panelists were evaluated as acceptable in overall evaluation (expressed as "○"). The evaluation results are listed in Table 3.

### O Presence or absence of oat milk-derived strange flavor (grassy grain smell)

Score 1: A strange flavor was considerably detected.
Score 2: The strange flavor was detected.
Score 3: The strange flavor was detected slightly, but the emulsion had an acceptable flavor for eating/drinking.
Score 4: No strange flavor was detected.
Score 5: No strange flavor was detected at all.

### O Flavor intensity (intensity of flavor release detected immediately after eating/drinking and intensity of rich feeling derived from oat milk detected in latter half)

Score 1: Flavor release was considerably weak, and no rich feeling derived from oat milk was detected at all.
Score 2: Flavor release was weak, and a rich feeling derived from oat milk was slightly detected.
Score 3: Flavor release was developed, and the rich feeling derived from oat milk was detected.
Score 4: Flavor release was strong, and the rich feeling derived from oat milk was detected well.
Score 5: The flavor release was considerably strong, the rich feeling derived from oat milk was also strongly detected, and the flavor of the whole emulsion was considerably good.

**[Table 3]**

| | Oil and/or fat name | Amount [wt.%] of oil and/or fat for study blended in oil and/or fat content (oil content) of oil-in-water emulsion | Development of strange flavor | Flavor intensity | Overall evaluation |
|---|---|---|---|---|---|
| Comparative Example 1-4 | Coconut oil | - | 1 | 5 | × |
| Example 1-9 | Randomly interesterified oil and/or fat E1 | 2.49 | 5 | 3 | ○ |
| Example 1-10 | E1/palm middle-melting-point oil = 10/90 | 0.25 | 4 | 4 | ○ |

Among the oil-in-water emulsions blended with oat milk, in Comparative Example 1-4 blended with coconut oil, the flavor release and rich feeling derived from oat milk were considerably strong, but, at the same time, the strange flavor was considerably detected. On the other hand, in Examples 1-9 and 1-10 in which the randomly interesterified oil and/or fat E1 or E1 and the palm middle-melting-point oil was/were blended, the strange flavor derived from oat milk was not detected at all, and the rich feeling derived from oat milk was detected.

### <Study 1-3> Study on soymilk-blended oil-in-water emulsion

### (Oil and/or Fat for Study)

In this study, the randomly interesterified oils and/or fats E1 and E4 to E8 were used. In addition, coconut oil, palm middle-melting-point oil, and an oil and/or fat mainly composed of stearic acid and oleic acid (available from Fuji Oil Co., Ltd., rising melting point: 25°C) were used.

### Preparation of oil-in-water emulsion using soymilk

An oil-in-water emulsion of soymilk was obtained by the following preparation method.
1. While all materials except the oils and/or fats, according to the formulation in Table 4, were mixed with a homomixer (5000 rpm at 60°C), the oil and/or fat presented in Table 5 was added thereto. The blank of Comparative Example 1-5 was prepared by adding more water instead of adding the oil and/or fat.
2. The mixture was stirred at 6000 rpm for 20 minutes.
3. The solutions obtained in 2 were passed through a high-pressure homogenizer (15 Mpa) and aged at 5°C overnight to obtain oil-in-water emulsions for tasting.

The amounts of the oils and/or fats for study blended in the oil and/or fat content (oil content) of the oil-in-water emulsions are presented in Table 5.

**[Table 4]**

| | [Parts by weight] |
|---|---|
| Oils and/or fats | 5.00 |
| Soymilk cream | 20.00 |
| Sugar | 0.50 |
| Salt | 0.03 |
| Water | 74.47 |
| Emulsifier | 0.53 |
| Total | 100.53 |

| | |
|---|---|
| Soymilk cream: Soymilk Cream (available from Fuji Oil Co., Ltd., lipid content: 12.3%) | |

### (Evaluation method)

The presence or absence of the strange flavor derived from the plant-based milk and the flavor intensity were evaluated as follows. Sensory evaluation was conducted by 11 panelists, and the oil-in-water emulsions determined to have Score 3 or higher in each evaluation by mutual agreement of the panelists were evaluated as acceptable in overall evaluation (expressed as "○"). The evaluation results are listed in Table 5.

### O Presence or absence of soymilk-derived strange flavor (grassy smell or bean smell)

Score 1: A strange flavor was considerably detected.
Score 2: The strange flavor was detected.
Score 3: The strange flavor was detected slightly, but the emulsion had an acceptable flavor for eating/drinking.
Score 4: No strange flavor was detected.
Score 5: No strange flavor was detected at all.

### O Flavor intensity (intensity of flavor release detected immediately after eating/drinking and intensity of rich feeling derived from soymilk detected in latter half)

Score 1: Flavor release was considerably weak, and no rich feeling derived from soymilk was detected at all.
Score 2: Flavor release was weak, and a rich feeling derived from soymilk was slightly detected.
Score 3: Flavor release was developed, and the rich feeling derived from soymilk was detected.
Score 4: Flavor release was strong, and the rich feeling derived from soymilk was detected well.
Score 5: The flavor release was considerably strong, the rich feeling derived from soymilk was also strongly detected, and the flavor of the whole emulsion was considerably good.

**Table 5**

| | Oil and/or fat name | Amount [wt.%] of oil and/or fat for study blended in oil and/or fat content (oil content) of oil-in-water emulsion | Development of strange flavor | Flavor intensity | Overall evaluation |
|---|---|---|---|---|---|
| Comparative Example 1-5 | Blank | - | 1 | 2 | × |
| Comparative Example 1-6 | Coconut oil | - | 2 | 5 | × |
| Comparative Example 1-7 | Palm middle-melting-point oil | - | 1 | 4 | × |
| Comparative Example 1-8 | Oil and/or fat mainly composed of stearic acid and oleic acid | - | 1 | 4 | × |
| Example 1-11 | Randomly interesterified oil and/or fat E1 | 52.5 | 5 | 3 | ○ |
| Example 1-12 | Randomly interesterified oil and/or fat E4 | 52.5 | 4 | 3 | ○ |
| Example 1-13 | Randomly interesterified oil and/or fat E5 | 52.5 | 4 | 3 | ○ |
| Example 1-14 | Randomly interesterified oil and/or fat E6 | 52.5 | 4 | 3 | ○ |
| Example 1-15 | Randomly interesterified oil and/or fat E7 | 52.5 | 3 | 3 | ○ |
| Example 1-16 | Randomly interesterified oil and/or fat E8 | 52.5 | 4 | 3 | ○ |
| Example 1-17 | E1/coconut oil = 10/90 | 5.25 | 5 | 5 | ○ |
| Example 1-18 | E1/palm middle-melting-point oil = 10/90 | 5.25 | 4 | 5 | ○ |
| Example 1-19 | E1/oil and/or fat mainly composed of stearic acid and oleic acid = 10/90 | 5.25 | 4 | 5 | ○ |
| Example 1-20 | E5/coconut oil = 10/90 | 5.25 | 4 | 4 | ○ |
| Example 1-21 | E5/palm middle-melting-point oil = 10/90 | 5.25 | 4 | 4 | ○ |
| Example 1-22 | E5/oil and/or fat mainly composed of stearic acid and oleic acid = 10/90 | 5.25 | 4 | 4 | ○ |
| Example 1-23 | E8/coconut oil = 10/90 | 5.25 | 5 | 5 | ○ |
| Example 1-24 | E8/palm middle-melting-point oil = 10/90 | 5.25 | 4 | 4 | ○ |
| Example 1-25 | E8/oil and/or fat mainly composed of stearic acid and oleic acid = 10/90 | 5.25 | 4 | 4 | ○ |
| Example 1-26 | E1/palm middle-melting-point oil = 5/95 | 2.62 | 4 | 4 | ○ |
| Example 1-27 | E1/palm middle-melting-point oil = 3/97 | 1.57 | 3 | 4 | ○ |
| Example 1-28 | E1/palm middle-melting-point oil = 1/99 | 0.53 | 3 | 4 | ○ |

Among the oil-in-water emulsions of soymilk, in the blank containing no oil and/or fat (Comparative Example 1-5), the soymilk-derived strange flavor was considerably detected, and the flavor release and rich feeling were weakly detected. In Comparative Examples 1-6 to 1-8 each containing no randomly interesterified oil and/or fat, the intensities of the flavor release and rich feeling derived from soymilk were good, but the soymilk-derived strange flavor was detected. In particular, in Comparative Examples 1-7 and 1-8, a considerably strong soymilk-derived strange flavor was detected.

In Examples 1-11 to 1-16 in which the randomly interesterified oils and/or fats E1 and E4 to E8 were blended, the soymilk-derived strange flavor was not detected, and the intensities of the flavor release and rich feeling were also good. In addition, also in Examples 1-17 to 1-25 in which 10% of the oils and/or fats of Comparative Examples 1-11 to 1-13 were substituted with the randomly interesterified oils and/or fats E1, E5, and E8, respectively, no soymilk-derived strange flavor was detected at all, the flavor release and rich feeling were considerably strong, and the flavor of the whole emulsions was good. In particular, when coconut oil and the randomly interesterified oil and/or fat were used in combination, the emulsions had a well-balanced flavor (Example 1-17 and Example 1-23). In addition, even when the palm middle-melting-point oil was substituted with the randomly interesterified oil and/or fat E1 in a dose-dependent manner, almost no soymilk-derived strange flavor was detected, and the flavor intensity was also good (Examples 1-26 to 1-28).

From this study, it was confirmed that each of the randomly interesterified oils and/or fats was sufficiently suppressed in soymilk-derived strange flavor regardless of the type oil and/or fat to be blended together and even when each of the randomly interesterified oils and/or fats was blended in a small amount. In addition, an oil-in-water emulsion having well-balanced flavor and also having good flavor release and rich feeling could be obtained.

### <Study 1-4> Study on soymilk-blended oil-in-water emulsion

### (Oil and/or fat for study)

In this study, the randomly interesterified oil and/or fat E1 was used. In addition, coconut oil and palm middle-melting-point oil were used.

### (Preparation of oil-in-water emulsion using soymilk)

An oil-in-water emulsion subjected to a sterilization treatment and produced from soymilk was obtained by the following preparation method.
1. While all materials except the oils and/or fats, according to the formulation in Table 4, were mixed with a homomixer (5000 rpm at 60°C), the oil and/or fat presented in Table 6 was added thereto.
2. The mixture was stirred at 6000 rpm for 20 minutes.
3. The solution obtained in 2 was subjected to a sterilization treatment in an ultra-high temperature sterilization facility (145°C for 7 seconds).
4. The solutions after the sterilization were passed through a high-pressure homogenizer (15 Mpa) and aged at 5°C overnight to obtain oil-in-water emulsions for tasting.

The amounts of the oils and/or fats for study blended in the oil and/or fat content (oil content) of the oil-in-water emulsions are presented in Table 6.

### Evaluation Method

Evaluation was carried out in the same manner as in Study 3. The evaluation results are listed in Table 6.

**Table 6**

| | Oil and/or fat name | Amount [wt.%] of oil and/or fat for study blended in oil and/or fat content (oil content) of oil-in-water emulsion | Development of strange flavor | Flavor intensity | Overall evaluation |
|---|---|---|---|---|---|
| Comparative Example 1-9 | Coconut oil | - | 2 | 5 | × |
| Example 1-29 | Randomly interesterified oil and/or fat E1 | 52.5 | 5 | 3 | ○ |
| Example 1-30 | E1/palm middle-melting-point oil = 10/90 | 5.25 | 4 | 4 | ○ |

When the oil-in-water emulsion containing soymilk was sterilized, the oil-in-water emulsion blended with coconut oil of Comparative Example 1-9 had strong flavor release and rich feeling, but a strange flavor was detected, whereas the oil-in-water emulsion of Example 1-29 blended with the randomly interesterified oil and/or fat E1 or the oil-in-water emulsion of Example 1-30 in which 10% of the palm middle-melting-point oil was substituted with E1 did not have any soymilk-derived strange flavor and had good flavor intensity.

It was confirmed that, even when a small amount of the randomly interesterified oil and/or fat of the present invention was blended into the oil-in-water emulsion, the plant-based milk-derived strange flavor could be sufficiently suppressed, and that the plant base-derived rich flavor could also be detected.

### <Study 2> Study on animal protein-blended oil-in-water emulsion

### (Comparative Example 2-1) Basic formulation

For 30 minutes, 9.5 parts of "milk protein" (trade name: Promilk85, available from Ingredia, total solid content: 95.0%, protein content: 81.5%), 7 parts of "skimmed milk powder" (available from Yotsuba Milk Products Co., Ltd., total solid content: 95.9%, protein content: 35.6%), 3.4 parts of "heavy cream" (available from Takanashi Milk Products Co., Ltd., protein content: 1.7%), 0.2 parts of an emulsifier, 0.4 parts of a pH adjusting agent, and 79.5 parts of water were combined with a homomixer. Then, the mixture was homogenized at a homogenization pressure of 3 Mpa, and immediately cooled to 5°C.

### (Examples 2-1 to 2-12, and Comparative Example 2-2) Type of randomly interesterified oil and/or fat and amount of oil and/or fat added

Based on the formulation of Comparative Example 2-1, an oil-in-water emulsion was prepared in the same manner as in Comparative Example 2-1 except that a part of water was replaced with the randomly interesterified oils and/or fats presented in Tables 7 and 8, and the effect obtained by the addition of each oil and/or fat was confirmed. Further, the amount of the oil and/or fat added was adjusted to be increased or decreased by the amount of water added, and the effect due to the amount of the oil and/or fat added was also confirmed.

### (Comparative Examples 2-3 to 2-4, and Example 2-13) Combined use with other oils and/or fats

Based on the formulation of Comparative Example 2-1, an oil-in-water emulsion was prepared in the same manner as in Comparative Example 2-1 except that a part of water was replaced with refined coconut oil or rapeseed oil, and the effect obtained by the addition of each oil and/or fat was confirmed. Further, an oil-in-water emulsion was prepared in the same manner as in Comparative Example 2-1 except that a part of refined coconut oil was replaced with the randomly interesterified oils and/or fats presented in Table 9, and the effect obtained by the addition was confirmed.

The effect obtained by the addition was confirmed by asking five taste panelists skilled in the field of milk to perform sensory evaluation, at the timing when the obtained oil-in-water emulsion was refrigerated and stored at 5°C for one day. The sensory evaluation was scored from Score 1 to Score 5, according to the following evaluation criteria, by mutual agreement of the panelists, and the oil-in-water emulsions having Score 3 or higher were evaluated as acceptable.

### (Evaluation criteria)

Score 5: No milk protein-derived strange flavor was detected, and the flavor was very good.
Score 4: Almost no milk protein-derived strange flavor was detected, and the flavor was good.
Score 3: A milk protein-derived strange flavor was slightly detected, but the flavor is good.
Score 2: The milk protein-derived strange flavor was detected, and the flavor was bad.
Score 1: The milk protein-derived strange flavor was most detected, and the flavor was very bad.

**Table 7**

| | Comparative Example 2-1 | Example 2-1 | Example 2-2 | Example 2-3 | Example 2-4 | Example 2-5 | Example 2-6 | Example 2-7 |
|---|---|---|---|---|---|---|---|---|
| Milk protein | 9.5 | 9.5 | 9.5 | 9.5 | 9.5 | 9.5 | 9.5 | 9.5 |
| Skimmed milk powder | 7.0 | 7.0 | 7.0 | 7.0 | 7.0 | 7.0 | 7.0 | 7.0 |
| Heavy cream | 3.4 | 3.4 | 3.4 | 3.4 | 3.4 | 3.4 | 3.4 | 3.4 |
| Randomly interesterified oil and/or fat E1 | - | 5.0 | - | - | - | - | - | - |
| Randomly interesterified oil and/or fat E2 | - | - | 5.0 | - | - | - | - | - |
| Randomly interesterified oil and/or fat E3 | - | - | - | 5.0 | - | - | - | - |
| Randomly interesterified oil and/or fat E4 | - | - | - | - | 5.0 | - | - | - |
| Randomly interesterified oil and/or fat E5 | - | - | - | - | - | 5.0 | - | - |
| Randomly interesterified oil and/or fat E6 | - | - | - | - | - | - | 5.0 | - |
| Randomly interesterified oil and/or fat E7 | - | - | - | - | - | - | - | 5.0 |
| Emulsifier | 0.2 | 0.2 | 0.2 | 0.2 | 0.2 | 0.2 | 0.2 | 0.2 |
| pH adjusting agent | 0.4 | 0.4 | 0.4 | 0.4 | 0.4 | 0.4 | 0.4 | 0.4 |
| Water | 79.5 | 74.5 | 74.5 | 74.5 | 74.5 | 74.5 | 74.5 | 74.5 |
| Total | 100 | 100 | 100 | 100 | 100 | 100 | 100 | 100 |
| Protein content of oil-in-water emulsion [%] | 10.3 | 10.3 | 10.3 | 10.3 | 10.3 | 10.3 | 10.3 | 10.3 |
| Amount of randomly interesterified oil and/or fat added [parts by weight] (based on 100 parts by weight of protein content in oil-in-water emulsion) | 0.0 | 48.5 | 48.5 | 48.5 | 48.5 | 48.5 | 48.5 | 48.5 |
| Evaluation during storage at 5°C for 1 day | 1 | 5 | 5 | 5 | 5 | 5 | 5 | 5 |

**Table 8**

| | Comparative Example 2-1 | Example 2-8 | Example 2-9 | Example 2-1 | Example 2-10 | Example 2-11 | Example 2-12 | Comparative Example 2-2 |
|---|---|---|---|---|---|---|---|---|
| Milk protein | 9.5 | 9.5 | 9.5 | 9.5 | 9.5 | 9.5 | 9.5 | 9.5 |
| Skimmed milk powder | 7.0 | 7.0 | 7.0 | 7.0 | 7.0 | 7.0 | 7.0 | 7.0 |
| Heavy cream | 3.4 | 3.4 | 3.4 | 3.4 | 3.4 | 3.4 | 3.4 | 3.4 |
| Randomly interesterified oil and/or fat E1 | - | 45 | 10 | 5.0 | 3.0 | 1.0 | 0.2 | 0.1 |
| Emulsifier | 0.2 | 0.2 | 0.2 | 0.2 | 0.2 | 0.2 | 0.2 | 0.2 |
| pH adjusting agent | 0.4 | 0.4 | 0.4 | 0.4 | 0.4 | 0.4 | 0.4 | 0.4 |
| Water | 79.5 | 34.5 | 69.5 | 74.5 | 76.5 | 78.5 | 79.3 | 79.4 |
| Total | 100 | 100 | 100 | 100 | 100 | 100 | 100 | 100 |
| Protein content of oil-in-water emulsion [%] | 10.3 | 10.3 | 10.3 | 10.3 | 10.3 | 10.3 | 10.3 | 10.3 |
| Amount of randomly interesterified oil and/or fat added [parts by weight] (based on 100 parts by weight of protein content in oil-in-water emulsion) | 0.0 | 436.9 | 97.1 | 48.5 | 29.1 | 9.7 | 1.9 | 0.97 |
| Evaluation during storage at 5°C for 1 day | 1 | 5 | 5 | 5 | 4 | 4 | 3 | 2 |

**Table 9**

| | Comparative Example 2-1 | Example 2-1 | Example 2-13 | Comparative Example 2-3 | Comparative Example 2-4 |
|---|---|---|---|---|---|
| Milk protein | 9.5 | 9.5 | 9.5 | 9.5 | 9.5 |
| Skimmed milk powder | 7.0 | 7.0 | 7.0 | 7.0 | 7.0 |
| Heavy cream | 3.4 | 3.4 | 3.4 | 3.4 | 3.4 |
| Randomly interesterified oil and/or fat E1 | - | 5.0 | 0.2 | - | - |
| Refined coconut oil | - | - | 4.8 | 5.0 | - |
| Rapeseed oil | - | - | - | - | 5.0 |
| Emulsifier | 0.2 | 0.2 | 0.2 | 0.2 | 0.2 |
| pH adjusting agent | 0.4 | 0.4 | 0.4 | 0.4 | 0.4 |
| Water | 79.5 | 74.5 | 74.5 | 74.5 | 74.5 |
| Total | 100 | 100 | 100 | 100 | 100 |
| Protein content of oil-in-water emulsion [%] | 10.3 | 10.3 | 10.3 | 10.3 | 10.3 |
| Amount of randomly interesterified oil and/or fat added [parts by weight] (based on 100 parts by weight of protein content in oil-in-water emulsion) | 0.0 | 48.5 | 1.9 | 0.0 | 0.0 |
| Evaluation during storage at 5°C for 1 day | 1 | 5 | 3 | 2 | 2 |

### Discussion

As can be seen from the results presented in Tables 7 to 9, the effect of suppressing the milk protein-derived strange flavor was obtained by adding at least 1.9 parts by weight or more of the randomly interesterified oil and/or fat prepared so as to have a specific fatty acid composition relative to 100 parts by weight of the protein content in the oil-in-water emulsion.

### (Examples 2-14 to 2-15) Blending of other raw materials and addition of oil and/or fat

Based on the formulation of Comparative Example 2-1, an oil-in-water emulsion was prepared in the same manner as in Comparative Example 2-1 except that the formulation of the raw materials was changed, and the effect obtained by the addition of the randomly interesterified oil and/or fat was confirmed. The amounts of the raw materials blended were as presented in Table 10. The effect obtained by the addition was also evaluated in the same manner as in Tables 7 to 9.

**[Table 10]**

| | Example 2-1 | Example 2-14 | Example 2-15 |
|---|---|---|---|
| Milk protein | 9.5 | 8.5 | 12.5 |
| Skimmed milk powder | 7.0 | 10 | - |
| Heavy cream | 3.4 | - | - |
| Randomly interesterified oil and/or fat E1 | 5.0 | 5.0 | 5.0 |
| Emulsifier | 0.2 | 0.2 | 0.2 |
| pH adjusting agent | 0.4 | 0.4 | 0.4 |
| Water | 74.5 | 75.9 | 81.9 |
| Total | 100 | 100 | 100 |
| Protein content of oil-in-water emulsion [%] | 10.3 | 10.5 | 10.2 |
| Amount of randomly interesterified oil and/or fat added [parts by weight] (based on 100 parts by weight of protein content in oil-in-water emulsion) | 48.5 | 47.6 | 49.0 |
| Evaluation during storage at 5°C for 1 day | 5 | 5 | 5 |

### Discussion

As can be seen from the results presented in Table 10, the effect of suppressing the milk protein-derived strange flavor was obtained by adding a specific amount of the randomly interesterified oil and/or fat prepared so as to have a specific fatty acid composition, regardless of the difference in milk protein-derived raw material.

### (Examples 2-16 to 2-18) Protein content

Based on the formulation of Comparative Example 2-1, an oil-in-water emulsion was prepared in the same manner as in Comparative Example 2-1 except that the raw material-derived protein content was changed, and the effect obtained by the addition of the randomly interesterified oil and/or fat was confirmed. The amounts of the raw materials blended were as presented in Table 11. The effect obtained by the addition was also evaluated in the same manner as in Tables 7 to 9.

**[Table 11]**

| | Example 2-16 | Example 2-17 | Example 2-18 |
|---|---|---|---|
| Milk protein | 3.4 | 2.0 | 1.4 |
| Skimmed milk powder | 7.0 | 4.2 | 2.8 |
| Heavy cream | 3.5 | 2.1 | 1.4 |
| Randomly interesterified oil and/or fat E1 | 5.0 | 5.0 | 5.0 |
| Emulsifier | 0.2 | 0.2 | 0.2 |
| pH adjusting agent | 0.4 | 0.4 | 0.4 |
| Water | 80.5 | 86.1 | 88.8 |
| Total | 100 | 100 | 100 |
| Protein content of oil-in-water emulsion [%] | 5.4 | 3.2 | 2.2 |
| Amount of randomly interesterified oil and/or fat added [parts by weight] (based on 100 parts by weight of protein content in oil-in-water emulsion) | 92.6 | 156 | 227 |
| Evaluation during storage at 5°C for 1 day | 5 | 5 | 5 |

### Discussion

As can be seen from the results presented in Table 11, the milk protein-derived strange flavor could be suppressed by adding a specific amount of the randomly interesterified oil and/or fat prepared so as to have a specific fatty acid composition to the oil-in-water emulsion having protein content of 2.2% or more.

### (Comparative Example 2-5) Application to whip cream

An oil phase was prepared by adding 0.24 parts of an emulsifier to 20 parts of palm kernel oil, 5 parts of hydrogenated palm kernel oil, 1 part of enzyme-interesterified oil (enzyme-interesterified oil of palm oil and palm kernel olein oil), and 4 parts of palm kernel stearic acid, and mixing and dissolving them.

An aqueous phase was prepared by mixing 59.795 parts of water, 8.5 parts of skimmed milk powder, 1 part of milk protein (potassium casein/trade name: Tatua500, available from Tatua, total solid content: 96.0%, protein: 91.2%), 0.24 parts of an emulsifier, 0.2 parts of a pH- adjusting agent, and 0.025 parts of a polysaccharide thickener while stirring with a homomixer.

The prepared oil phase and aqueous phase were preliminarily emulsified by stirring with a homomixer at 65°C for 30 minutes, subjected to a sterilization treatment by a direct heating method at 144°C for 4 seconds with an ultra-high temperature sterilizer (available from IWAI KIKAI KOGYO CO., LTD.), homogenized at a homogenization pressure of 40 Mpa, and immediately cooled to 10°C. After cooling, the mixture was aged for about 24 hours to obtain a whip cream.

### (Example 2-19) Addition of randomly interesterified oil and/or fat

Based on the formulation of Comparative Example 2-5, a whip cream was prepared in the same manner as in Comparative Example 2-5 except that 5 parts of the palm kernel oil was replaced with the randomly interesterified oil and/or fat E1, and the effect obtained by the addition of the oil and/or fat was confirmed.

The effect obtained by the addition was confirmed by whipping 1 kg of the obtained whip cream with a HOBART mixer (MODEL N-5 available from HOBART CORPORATION) at 3rd speed (300 rpm) until the maximum foaming state was reached, and asking five taste panelists skilled in the field of milk to perform sensory evaluation. The sensory evaluation was scored from Score 1 to Score 5, according to the following evaluation criteria, by mutual agreement of the panelists, and the oil-in-water emulsions having Score 3 or higher were evaluated as acceptable.

### (Evaluation Criteria)

Score 5: No milk protein-derived strange flavor was detected, and the flavor was very good.
Score 4: Almost no milk protein-derived strange flavor was detected, and the flavor was good.
Score 3: A milk protein-derived strange flavor was slightly detected, but the flavor is good.
Score 2: The milk protein-derived strange flavor was detected, and the flavor was bad.
Score 1: The milk protein-derived strange flavor was most detected, and the flavor was very bad.

**[Table 12]**

| | Comparative Example 2-5 | Example 2-19 |
|---|---|---|
| Protein content of oil-in-water emulsion [%] | 3.9 | 3.9 |
| Amount of randomly interesterified oil and/or fat added [parts by weight] (based on 100 parts by weight of protein content in oil-in-water emulsion) | 0 | 128 |
| Evaluation during storage at 5°C for 1 day | 2 | 5 |

### (Discussion)

As can be seen from the results presented in Table 12, the obtained whip cream could be suppressed in milk protein-derived strange flavor by adding a specific amount of the randomly interesterified oil and/or fat prepared so as to have a specific fatty acid composition.

### <Study 3> Study on plant-based fermented milk

### (Comparative Example 3-1) Basic formulation

Eighty (80) parts of "soymilk cream" (available from Fuji Oil Co., Ltd., total solid content: 19.0%, protein content: 5.6%, lipid content: 12.3%) as a plant-based milk, 1 part of glucose, and 18.9 parts of water were mixed to attain 99.9 parts, and combined for 30 minutes with a homomixer and homogenized at a homogenization pressure of 50 kg/cm2. To this was added 0.1 part of lactic acid bacteria, and lactic acid fermentation was performed at 43°C until the pH dropped to 4.6.

### (Examples 3-1 to 3-10, and Comparisons 3-2 and 3-3) Type of oil and/or fat and amount of oil and/or fat added

Based on the formulation of Comparative Example 3-1, fermented soymilk was prepared in the same manner as in Comparative Example 3-1 except that the randomly interesterified oils and/or fats presented in Table 1 were added as fermentation raw materials, and the effect obtained by the addition of each oil and/or fat was confirmed. Further, the amount of the oil and/or fat added was adjusted to be increased or decreased by the amount of water added, and the effect due to the amount of the oil and/or fat added was also confirmed.

The effect obtained by the addition was confirmed by asking five taste panelists skilled in the field of fermented milk to perform sensory evaluation, at the timing when the obtained fermented soymilk was refrigerated and stored at 5°C for one day and seven days. The sensory evaluation was scored from Score 1 to Score 5, according to the following evaluation criteria, by mutual agreement of the panelists, and the oil-in-water emulsions having Score 4 or higher were evaluated as acceptable.

### (Evaluation criteria for fermentation-derived unpleasant taste)

Score 5: No unpleasant taste was detected.
Score 4: Almost no unpleasant taste was detected.
Score 3: An unpleasant taste was slightly detected.
Score 2: The unpleasant taste was more detected.
Score 1: The unpleasant taste was most detected.

### (Evaluation criteria for raw material-derived unpleasant taste)

Score 5: No unpleasant taste was detected.
Score 4: Almost no unpleasant taste was detected.
Score 3: An unpleasant taste was slightly detected.
Score 2: The unpleasant taste was more detected.
Score 1: The unpleasant taste was most detected.

**[Table 13]**

| | Comparative Example 3-1 | Example 3-1 | Example 3-2 | Example 3-3 | Example 3-4 | Example 3-5 | Example 3-6 | Example 3-7 |
|---|---|---|---|---|---|---|---|---|
| Soymilk cream | 80 | 80 | 80 | 80 | 80 | 80 | 80 | 80 |
| Glucose | 1 | 1 | 1 | 1 | 1 | 1 | 1 | 1 |
| Randomly interesterified oil and/or fat E1 | - | 5 | - | - | - | - | - | - |
| Randomly interesterified oil and/or fat E2 | - | - | 5 | - | - | - | - | - |
| Randomly interesterified oil and/or fat E3 | - | - | - | 5 | - | - | - | - |
| Randomly interesterified oil and/or fat E4 | - | - | - | - | 5 | - | - | - |
| Randomly interesterified oil and/or fat E5 | - | - | - | - | - | 5 | - | - |
| Randomly interesterified oil and/or fat E6 | - | - | - | - | - | - | 5 | - |
| Randomly interesterified oil and/or fat E7 | - | - | - | - | - | - | - | 5 |
| Lactic acid bacteria | 0.1 | 0.1 | 0.1 | 0.1 | 0.1 | 0.1 | 0.1 | 0.1 |
| Water | 18.9 | 13.9 | 13.9 | 13.9 | 13.9 | 13.9 | 13.9 | 13.9 |
| Total | 100 | 100 | 100 | 100 | 100 | 100 | 100 | 100 |
| Lipid content of plant-based milk | 9.8 | 9.8 | 9.8 | 9.8 | 9.8 | 9.8 | 9.8 | 9.8 |
| Amount of oil and/or fat added (parts by weight*) *based on lipid content of plant-based milk | - | 51 | 51 | 51 | 51 | 51 | 51 | 51 |
| Storage at 5°C for 1 day (fermentation-derived) | 2 | 5 | 5 | 5 | 5 | 5 | 5 | 5 |
| (raw material-derived) | 5 | 5 | 5 | 5 | 5 | 5 | 5 | 5 |
| Storage at 5°C for 7 day (fermentation-derived) | 1 | 5 | 5 | 5 | 5 | 5 | 5 | 5 |
| (raw material-derived) | 5 | 5 | 5 | 5 | 5 | 5 | 5 | 5 |
| Overall evaluation | Unacceptable | Acceptable | Acceptable | Acceptable | Acceptable | Acceptable | Acceptable | Acceptable |

**[Table 14]**

| | Comparative Example 3-1 | Example 3-8 | Example 3-9 | Example 3-1 | Example 3-10 | Comparative Example 3-2 | Comparative Example 3-3 |
|---|---|---|---|---|---|---|---|
| Soymilk cream | 80 | 80 | 80 | 80 | 80 | 80 | 80 |
| Glucose | 1 | 1 | 1 | 1 | 1 | 1 | 1 |
| Randomly interesterified oil and/or fat E1 | - | 10 | 7.5 | 5 | 3 | 2.5 | - |
| MCT | - | - | - | - | - | - | 3 |
| Lactic acid bacteria | 0.1 | 0.1 | 0.1 | 0.1 | 0.1 | 0.1 | 0.1 |
| Water | 18.9 | 8.9 | 11.4 | 13.9 | 15.9 | 16.4 | 15.9 |
| Total | 100 | 100 | 100 | 100 | 100 | 100 | 100 |
| Lipid content of plant-based milk | 9.8 | 9.8 | 9.8 | 9.8 | 9.8 | 9.8 | 9.8 |
| Amount of oil and/or fat added (parts by weight*) *based on lipid content of plant-based milk | - | 102 | 77 | 51 | 31 | 26 | 31 |
| Storage at 5°C for 1 day (fermentation-derived) | 2 | 5 | 5 | 5 | 4 | 3 | 4 |
| (raw material-derived) | 5 | 5 | 5 | 5 | 5 | 5 | 2 |
| Storage at 5°C for 7 day (fermentation-derived) | 1 | 5 | 5 | 5 | 4 | 3 | 4 |
| (raw material-derived) | 5 | 5 | 5 | 5 | 5 | 5 | 2 |
| Overall evaluation | Unacceptable | Acceptable | Acceptable | Acceptable | Acceptable | Unacceptable | Unacceptable |

### (Discussion)

As can be seen from the results presented in Tables 13 and 14, the effect of suppressing flavor deterioration at the time of fermentation and during storage after fermentation was obtained, in all cases, by adding at least 30 parts by weight or more of the randomly interesterified oil and/or fat prepared so as to have a specific fatty acid composition based on the lipid derived from plant-based milk was effective in suppressing the deterioration of flavor.

### (Examples 3-11 to 3-13) Use of other plant-based milks and addition of oil and/or fat Method of producing oat milk

To 1 part of rolled oat was added 7 parts of warm water (70°C), and the mixture was wet-ground using a "Comitrol" processor (available from URSCHEL). After the grinding, 0.1 parts of α-amylase was added, the mixture was subjected to an enzyme treatment for 30 minutes, fed to a continuous centrifugal separator, and centrifuged at 3000 × g for 3 minutes to separate it into oat milk and soy pulp (okara). The oat milk had protein content of 0.6% and lipid content of 0.8%.

Based on the formulation of Comparative Example 3-1, fermented soymilk was prepared in the same manner as in Comparative Example 3-1 except that other plant-based milks were used as fermentation raw materials, and the effect obtained by the addition of the randomly interesterified oil and/or fat was confirmed. The amounts of the raw materials blended were as presented in Table 15. The effect obtained by the addition was also evaluated in the same manner as in Tables 13 and 14.

**[Table 15]**

| | Example 3-11 | Example 3-12 | Example 3-13 |
|---|---|---|---|
| Plain soy milk | 80 | - | - |
| Almond milk | - | 80 | - |
| Oat milk | - | - | 98 |
| Glucose | 1 | 1 | 1 |
| Randomly interesterified oil and/or fat E1 | 1.5 | 2.3 | 0.4 |
| Lactic acid bacteria | 0.1 | 0.1 | 0.1 |
| Water | 17.4 | 16.6 | 0.5 |
| Total | 100 | 100 | 100 |
| Lipid content of plant-based milk | 3 | 4.5 | 0.8 |
| Amount of oil and/or fat added (parts by weight*) | 50 | 51 | 50 |
| *based on lipid content of plant-based milk | | | |
| Storage at 5°C for 1 day (fermentation-derived) | 5 | 5 | 5 |
| (raw material-derived) | 5 | 5 | 5 |
| Storage at 5°C for 7 day (fermentation-derived) | 5 | 5 | 5 |
| (raw material-derived) | 5 | 5 | 5 |
| Overall evaluation | Acceptable | Acceptable | Acceptable |

| | | | |
|---|---|---|---|
| * Plain soy milk (available from KIKKOMAN SOYFOODS COMPANY, protein content: 4.1%, lipid content: 3.7%) * Almond milk (available from Tsukuba Dairy Products Co., Ltd., protein content: 2.9%, lipid content: 5.6%) | | | |

### Discussion

From the results presented in Table 15, it was determined that the addition of a specific amount of the randomly interesterified oil and/or fat prepared so as to have a specific fatty acid composition was a method capable of suppressing flavor deterioration at the time of fermentation and during storage after fermentation even for fermentation raw materials which were other plant-based milks.

### (Example 3-14 and Comparative Example 3-4) Fermentation by yeast

Based on the formulations of Example 3-1 and Comparative Example 3-1, Saccharomyces cerevisiae and Kluyveromyces marxianus were added as yeasts instead of lactic acid bacteria, and aerobic fermentation (shaking culture) was performed at 25°C for 72 hours. After completion of the fermentation, the mixture was sterilized at 80°C for 2 minutes to obtain yeast-fermented soymilk. The effect obtained by the addition was evaluated in the same manner as in Tables 13 and 14.

**[Table 16]**

| | Comparative Example 3-4 | Example 3-14 |
|---|---|---|
| Soymilk cream | 80 | 80 |
| Glucose | 1 | 1 |
| Randomly interesterified oil and/or fat E1 | - | 5 |
| Yeast | 0.1 | 0.1 |
| Water | 18.9 | 13.9 |
| Total | 100 | 100 |
| Lipid content of plant-based milk | 9.8 | 9.8 |
| Amount of oil and/or fat added (parts by weight*) | 0 | 51 |
| *based on lipid content of plant-based milk | | |
| Storage at 5°C for 1 day (fermentation-derived) | 1 | 5 |
| (raw material-derived) | 1 | 5 |
| Storage at 5°C for 7 day (fermentation-derived) | 1 | 5 |
| (raw material-derived) | 1 | 5 |
| Overall evaluation | Unacceptable | Acceptable |

### (Discussion)

As can be seen from the results presented in Table 16, also when yeast was used as the microorganism and aerobic fermentation was performed, flavor deterioration of the plant-based fermented milk at the time of fermentation and during storage after fermentation could be suppressed by adding a specific amount of the randomly interesterified oil and/or fat prepared so as to have a specific fatty acid composition.

### (Examples 3-15 and 3-16, and Comparative Examples 3-5 and 3-6) Addition to plant-based fermented milk

The randomly interesterified oil and/or fat E1 was added to Comparative Example 3-1 in accordance with Table 17, and the effect obtained by the addition of the randomly interesterified oil and/or fat to the plant-based fermented milk was confirmed. The effect obtained by the addition was evaluated in the same manner as in Tables 13 and 14.

**[Table 17]**

| | Comparative Example 3-5 | Example 3-15 | Example 3-16 | Comparative Example 3-6 |
|---|---|---|---|---|
| Comparative Example 3-1 | 90 | 95 | 90 | 90 |
| Randomly interesterified oil and/or fat E1 | - | 5 | 3 | 2 |
| Water | 10 | 0 | 2 | 3 |
| Total | 100 | 100 | 100 | 100 |
| Lipid content of plant-based milk | 8.8 | 8.8 | 8.8 | 8.8 |
| Amount of oil and/or fat added (parts by weight*) | 0 | 57 | 34 | 23 |
| *based on lipid content of plant-based milk | | | | |
| Storage at 5°C for 1 day (fermentation-derived) | 2 | 5 | 4 | 3 |
| (raw material-derived) | 5 | 5 | 5 | 5 |
| Storage at 5°C for 7 day (fermentation-derived) | 1 | 5 | 4 | 3 |
| (raw material-derived) | 5 | 5 | 5 | 5 |
| Overall evaluation | Unacceptable | Acceptable | Acceptable | Unacceptable |

As can be seen from the results presented in Table 17, flavor deterioration of the plant-based fermented milk immediately after addition of the oil and/or fat after fermentation and during storage after fermentation could be suppressed by adding a specific amount of the randomly interesterified oil and/or fat prepared so as to have a specific fatty acid composition to the plant-based fermented milk.

### (Example 3-17) Application of plant-based fermented milk to creams

An oil phase was prepared by adding 0.4 parts of an emulsifier to 20 parts of a fractionated palm oil and/or fat (rising melting point: 26°C) and 9 parts of a lauric oil and/or fat (palm kernel oil/rising melting point: 28°C), and mixing and dissolving them.

An aqueous phase was prepared by adding 5 parts of the plant-based fermented milk (liquid temperature: 40°C) obtained in Example 6-1 to 25.7 parts of water and 40 parts of plain soy milk, and mixing and dissolving them, while stirring with a homomixer.

The prepared oil phase and aqueous phase were preliminarily emulsified by stirring with a homomixer at 65°C for 30 minutes, subjected to a sterilization treatment by a direct heating method at 144°C for 4 seconds with an ultra-high temperature sterilizer (available from IWAI KIKAI KOGYO CO., LTD.), homogenized at a homogenization pressure of 45 kg/cm2, and immediately cooled to 5°C. After cooling, the mixture was aged for about 24 hours to obtain plant-based creams.

The resulting foaming oil-in-water emulsion (1 kg) was whipped with a HOBART mixer (MODEL N-5 available from HOBART CORPORATION) at 3rd speed (300 rpm) until the maximum foaming state was reached, and the flavor was confirmed.

The resulting foamed plant-based creams had a very good flavor with no deterioration smell.

### (Example 3-18) Application of plant-based fermented milk to butter

An aqueous phase was formed by adding 2.4 parts of rock salt to 300 parts of the plant-based fermented milk (liquid temperature: 40°C) obtained in Comparative Example 3-1. While the aqueous phase was stirred with a hand mixer, 15 parts of the randomly interesterified oil and/or fat E1 and 435 parts of coconut oil having a rising melting point of about 25°C were warmed to 40°C and molten, and this molten product was gradually added to prepare an emulsified liquid.

The obtained emulsified liquid was cooled overnight in a refrigerator at 4°C to obtain a plant-based butter. The resulting plant-based butter had a very good flavor with no deterioration smell.

## Claims

1. An oil-in-water emulsion comprising a randomly interesterified oil and/or fat satisfying the following (A) and (B):
(A) in a constituent fatty acid composition, saturated fatty acids content having from 6 to 10 carbon atoms is from 0.3 to 40 wt.%;
(B) in a constituent fatty acid composition, saturated fatty acids content having from 12 to 14 carbon atoms is from 40 to 80 wt.%.

2. The oil-in-water emulsion according to claim 1, wherein the randomly interesterified oil and/or fat satisfies (A), (B), and the following (C):
(C) oleic acid content in the constituent fatty acid composition is 10 wt.% or less.

3. The oil-in-water emulsion according to claim 1, wherein the randomly interesterified oil and/or fat satisfies (A), (B), and the following (D):
(D) a ratio of (the saturated fatty acids content having from 12 to 14 carbon atoms)/(the saturated fatty acids content having from 6 to 10 carbon atoms) is from 1.0 to 6.0.

4. The oil-in-water emulsion according to claim 2, wherein the randomly interesterified oil and/or fat satisfies (A), (B), (C), and the following (D):
(D) a ratio of (the saturated fatty acids content having from 12 to 14 carbon atoms)/(the saturated fatty acids content having from 6 to 10 carbon atoms) is from 1.0 to 6.0.

5. The oil-in-water emulsion according to claim 1 or 2, wherein the (A) is from 1 to 35 wt.%.

6. The oil-in-water emulsion according to claim 3 or 4, wherein the (A) is from 1 to 35 wt.%.

7. The oil-in-water emulsion according to claim 1 or 2, comprising a plant-based milk.

8. The oil-in-water emulsion according to claim 3 or 4, comprising a plant-based milk.

9. The oil-in-water emulsion according to claim 5 or 6, comprising a plant-based milk.

10. The oil-in-water emulsion according to claim 7, wherein the plant-based milk is derived from one or more selected from almond, oat, and soybean.

11. The oil-in-water emulsion according to claim 1 or 2, comprising an animal protein.

12. The oil-in-water emulsion according to claim 3 or 4, comprising an animal protein.

13. The oil-in-water emulsion according to claim 5 or 6, comprising an animal protein.

14. The oil-in-water emulsion according to claim 11, wherein protein content in the oil-in-water emulsion is 2.2 wt.% or more.

15. The oil-in-water emulsion according to claim 11, wherein the animal protein is a milk protein.

16. The oil-in-water emulsion according to claim 1 or 2, comprising a plant-based fermented milk.

17. The oil-in-water emulsion according to claim 3 or 4, comprising a plant-based fermented milk.

18. The oil-in-water emulsion according to claim 5 or 6, comprising a plant-based fermented milk.

19. The oil-in-water emulsion according to claim 16, wherein the plant-based fermented milk is fermented by microorganisms.

20. The oil-in-water emulsion according to claim 19, wherein the microorganisms are one or more selected from lactic acid bacteria, yeast, and koji.

21. An oil-in-water emulsion comprising a plant-based milk and a randomly interesterified oil satisfying the following (A) and (B), the oil-in-water emulsion including a fermentation step by microorganisms:
(A) in a constituent fatty acid composition, saturated fatty acids content having from 6 to 10 carbon atoms is from 0.3 to 40 wt.%;
(B) in a constituent fatty acid composition, saturated fatty acids content having from 12 to 14 carbon atoms is from 40 to 80 wt.%.

22. The oil-in-water emulsion according to claim 21, wherein the microorganisms are one or more selected from lactic acid bacteria, yeast, and koji.

23. A food and beverage comprising an oil-in-water emulsion comprising a randomly interesterified oil and/or fat satisfying the following (A) and (B):
(A) in a constituent fatty acid composition, saturated fatty acids content having from 6 to 10 carbon atoms is from 0.3 to 40 wt.%;
(B) in a constituent fatty acid composition, saturated fatty acids content having from 12 to 14 carbon atoms is from 40 to 80 wt.%.

24. The food and beverage according to claim 23, comprising a plant-based milk.

25. The food and beverage according to claim 23, comprising an animal protein.

26. The food and beverage according to claim 23, comprising a plant-based fermented milk.

27. A food and beverage comprising the oil-in-water emulsion described in claim 21 or 22.

28. The food and beverage according to claim 24 or 25, wherein the food and beverage is a beverage, a whip cream, or a whitener.

29. The food and beverage according to claim 26 or 27, wherein the food and beverage is a plant-based yogurt, probiotic beverage, creams, ice creams, cheese, butter or margarine.

30. A method of producing an oil-in-water emulsion prepared by using a randomly interesterified oil and/or fat satisfying the following (A) and (B):
(A) in a constituent fatty acid composition, saturated fatty acids content having from 6 to 10 carbon atoms is from 0.3 to 40 wt.%;
(B) in a constituent fatty acid composition, saturated fatty acids content having from 12 to 14 carbon atoms is from 40 to 80 wt.%.

31. The method of producing an oil-in-water emulsion according to claim 30, wherein the oil-in-water emulsion comprises a plant-based milk.

32. The method of producing an oil-in-water emulsion according to claim 30, wherein the oil-in-water emulsion comprises an animal protein.

33. The method of producing an oil-in-water emulsion according to claim 30, wherein the oil-in-water emulsion comprises a plant-based fermented milk.

34. A method of producing an oil-in-water emulsion comprising a plant-based milk and a randomly interesterified oil satisfying the following (A) and (B), the method comprising a fermentation step by microorganisms:
(A) in a constituent fatty acid composition, saturated fatty acids content having from 6 to 10 carbon atoms is from 0.3 to 40 wt.%;
(B) in a constituent fatty acid composition, saturated fatty acids content having from 12 to 14 carbon atoms is from 40 to 80 wt.%.

35. A method of producing a food and beverage comprising an oil-in-water emulsion prepared by using a randomly interesterified oil and/or fat satisfying the following (A) and (B):
(A) in a constituent fatty acid composition, saturated fatty acids content having from 6 to 10 carbon atoms is from 0.3 to 40 wt.%;
(B) in a constituent fatty acid composition, saturated fatty acids content having from 12 to 14 carbon atoms is from 40 to 80 wt.%.

36. The method of producing a food and beverage according to claim 35, wherein the food and beverage comprises a plant-based milk.

37. The method of producing a food and beverage according to claim 35, wherein the food and beverage comprises an animal protein.

38. The method of producing a food and beverage according to claim 35, wherein the food and beverage comprises a plant-based fermented milk.

39. The method of producing a food and beverage according to claim 35, wherein a plant-based milk is used and the method further comprises a fermentation step.

40. The method of producing a food and beverage according to claim 36 or 37, wherein the food and beverage is a beverage, a whip cream, or a whitener.

41. The method of producing a food and beverage according to claim 38 or 39, wherein the food and beverage is a plant-based yogurt, probiotic beverage, creams, ice creams, cheese, butter or margarine.

42. A method of suppressing a strange flavor of a food and beverage by incorporating an oil-in-water emulsion comprising a randomly interesterified oil and/or fat satisfying the following (A) and (B):
(A) in a constituent fatty acid composition, saturated fatty acids content having from 6 to 10 carbon atoms is from 0.3 to 40 wt.%;
(B) in a constituent fatty acid composition, saturated fatty acids content having from 12 to 14 carbon atoms is from 40 to 80 wt.%.
